(19) **Europäisches Patentamt / European Patent Office / Office européen des brevets**

(11) **EP 4 572 479 A1**

(12) **EUROPEAN PATENT APPLICATION**
published in accordance with Art. 153(4) EPC

(43) Date of publication:
**18.06.2025 Bulletin 2025/25**

(21) Application number: **23870544.6**

(22) Date of filing: **20.09.2023**

(51) International Patent Classification (IPC):
*H04W 72/0446* $^{(2023.01)}$

(52) Cooperative Patent Classification (CPC):
**H04L 5/14; H04L 5/16; H04W 72/0446;
H04W 72/231; H04W 72/232; H04W 72/512**

(86) International application number:
**PCT/CN2023/120178**

(87) International publication number:
**WO 2024/067312 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211214676**

(71) Applicant: **Huawei Technologies Co., Ltd.
Shenzhen, Guangdong 518129 (CN)**

(72) Inventors:
- **LI, Jun
  Shenzhen, Guangdong 518129 (CN)**
- **JIAO, Shurong
  Shenzhen, Guangdong 518129 (CN)**
- **HUA, Meng
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **RETRANSMISSION METHOD AND APPARATUS**

(57) Embodiments of this application provide a repetition transmission method and an apparatus, to determine a repetition transmission position for joint repetition transmission in a half-duplex slot and a full-duplex slot. The method includes: A terminal device receives first indication information from a network device, where the first indication information indicates whether a half-duplex slot and a full-duplex slot can be used together for repetition transmission. Further, the terminal device determines at least one repetition transmission position of a first channel based on the first indication information and a time domain position at which the first channel is repeatedly transmitted for the first time; and sends or receives the first channel at the at least one repetition transmission position.

FIG. 6

**Description**

This application claims priority to Chinese Patent Application No. 202211214676.1, filed with the China National Intellectual Property Administration on September 30, 2022 and entitled "REPETITION TRANSMISSION METHOD AND APPARATUS", which is incorporated herein by reference in its entirety.

**TECHNICAL FIELD**

Embodiments of this application relate to the wireless communication field, and in particular, to a repetition transmission method and an apparatus.

**BACKGROUND**

A next generation radio (next generation radio, 5GNR) system mainly supports three types of services: enhanced broadband communication (enhanced mobile broadband, eMBB), massive machine type communication (massive machine type communication, mMTC), and ultra-reliable and low-latency communication (ultra-reliable and low-latency communication, URLLC).

Because the URLLC has a high requirement on both a latency and reliability, a solution currently provided by a 3rd generation partnership project (3rd generation partnership project, 3GPP) communication system is to introduce a repetition transmission mechanism, that is, to improve transmission reliability and reduce a transmission latency through a plurality of repetition transmissions.

However, how to determine a repetition transmission position is an urgent problem to be resolved currently.

**SUMMARY**

This application provides a repetition transmission method and an apparatus, so that a half-duplex slot and a full-duplex slot can be used together for repetition transmission.

According to a first aspect, a repetition transmission method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: receiving first indication information from a network device, where the first indication information indicates whether a half-duplex slot and a full-duplex slot can be used together for repetition transmission; determining at least one repetition transmission location of a first channel based on the first indication information and a time domain position at which the first channel is repeatedly transmitted for the first time; and sending or receiving the first channel at the at least one repetition transmission location.

According to this solution, the terminal device or the network device may determine the at least one repetition transmission position of the first channel based on the first indication information and the time domain position at which the first channel is repeatedly transmitted for the first time, to implement repetition transmission of the first channel at a position in the half-duplex slot and/or a position in the full-duplex slot. When the first indication information indicates that the half-duplex slot can be used together with a full-duplex slot for repetition transmission, the at least one repetition transmission position may be determined in the half-duplex slot, and may also be determined in the full-duplex slot, so that a latency of repetition transmission of the first channel is reduced.

In a possible design, the first indication information includes a bitmap whose size is M bits, and each of the M bits corresponds to at least one slot; and when a first bit corresponds to a half-duplex slot, a value of the first bit indicates whether at least one half-duplex slot corresponding to the first bit and a full-duplex slot can be used together for repetition transmission, where the first bit is any one of the M bits, and M is a positive integer.

According to this solution, the first indication information is configured for the half-duplex slot and/or the full-duplex slot by using a bitmap. This manner is simple, and is easy to perform an operation by a system, so that a latency of repetition transmission can be reduced, and scheduling complexity of the base station can also be reduced.

In a possible design, the first indication information further includes offset information and/or quantity information. The offset information indicates a 1st slot corresponding to a 1st bit in the M bits. The quantity information indicates a total quantity of slots corresponding to the M bits, or the quantity information indicates a quantity of slots corresponding to each bit.

According to this solution, the offset information and/or the quantity information is used to assist a bitmap to indicate a plurality of slots, so that a correspondence between the first indication information and the plurality of slots is more flexible. In addition, a quantity of bits in the bitmap can be reduced, so that an effect that is the same as the foregoing effect of using only the bitmap to indicate the plurality of slots is achieved by using a small quantity of bits, thereby reducing a data amount of the first indication information, and improving system operation efficiency.

In a possible design, the first indication information further includes first offset information, first quantity information, and/or a first consecutive quantity. The first offset information indicates a 1st slot that can be used together with a full-duplex slot for repetition transmission. The first quantity information indicates a total quantity of slots in one period. The first consecutive quantity indicates a total quantity of slots that can be used together with a full-duplex slot for repetition transmission in the period.

According to this solution, a plurality of slots may be indicated by using only the first consecutive slot quantity, the first offset information, and/or the first quantity information, so that none of half-duplex slots in the plurality of slots can be used together with a full-duplex slot for repetition transmission, or all of half-duplex slots in the plurality of slots can be used together with a full-duplex slot for repetition transmission, thereby reducing a data amount of the first indication information, and improving system operation efficiency.

In a possible design, the repetition transmission method provided in this embodiment of this application further includes: receiving second indication information from the network device, where the second indication information indicates whether a first half-duplex slot and a second half-duplex slot can be used together for repetition transmission.

In a possible design, the at least one repetition transmission position includes a position in the first half-duplex slot when the time domain position at which the first channel is repeatedly transmitted for the first time is in a first full-duplex slot, the first indication information indicates that the first half-duplex slot cannot be used together with a full-duplex slot for repetition transmission and indicates that the second half-duplex slot can be used together with a full-duplex slot for repetition transmission, and the second indication information indicates that the first half-duplex slot can be used together with the second half-duplex slot for repetition transmission.

According to this solution, when the time domain position at which the first channel is repeatedly transmitted for the first time is in the full-duplex slot, if it is learned, based on the first indication information, that the first half-duplex slot cannot be used together with a full-duplex slot for repetition transmission, and the second half-duplex slot can be used together with a full-duplex slot for repetition transmission, determining may continue to be performed based on the second indication information, and whether the first half-duplex slot and a full-duplex slot can be used together for repetition transmission is finally determined based on the second indication information. For example, when the second indication information indicates that the first half-duplex slot can be used together with the second half-duplex slot for repetition transmission, the at least one repetition transmission position of the first channel may be determined in the first half-duplex slot, so that a latency of repetition transmission of the first channel is reduced, and scheduling flexibility of the network device is also improved.

In a possible design, the first indication information includes a first bit value, and the first bit value indicates whether a half-duplex slot and a full-duplex slot can be used together for repetition transmission.

According to this solution, a plurality of slots are indicated by using only the first bit value, so that none of half-duplex slots in the plurality of slots can be used together with a full-duplex slot for repetition transmission, or all of half-duplex slots in the plurality of slots can be used together with a full-duplex slot for repetition transmission, thereby reducing a data amount of the first indication information, and improving system operation efficiency.

In a possible design, the repetition transmission method provided in this embodiment of this application further includes: receiving third indication information from the network device, where the third indication information indicates whether a third half-duplex slot and a full-duplex slot can be used together for repetition transmission.

In a possible design, the at least one repetition transmission position includes a position in the third half-duplex slot and/or a position in the full-duplex slot when the time domain position at which the first channel is repeatedly transmitted for the first time is in a first full-duplex slot, the first indication information indicates that the third half-duplex slot cannot be used together with a full-duplex slot for repetition transmission, and the third indication information indicates that the third half-duplex slot can be used together with a full-duplex slot for repetition transmission.

According to this solution, when the time domain position at which the first channel is repeatedly transmitted for the first time is in the full-duplex slot, if it is learned, based on the first indication information, that the third half-duplex slot can be used together with a full-duplex slot for repetition transmission, determining may continue to be performed based on the third indication information, and whether the third half-duplex slot and a full-duplex slot can be used together for repetition transmission is finally determined based on the third indication information. For example, when the third indication information indicates that the third half-duplex slot can be used together with a full-duplex slot for repetition transmission, the at least one repetition transmission position of the first channel may be determined in the third half-duplex slot and/or the full-duplex slot, so that a latency of repetition transmission of the first channel is reduced, and scheduling flexibility of the network device is also improved.

In a possible design, the at least one repetition transmission position includes a position in a fourth half-duplex slot when the time domain position at which the first channel is repeatedly transmitted for the first time is in the first full-duplex slot, and the first indication information indicates that the fourth half-duplex slot can be used together with a full-duplex slot for repetition transmission.

In a possible design, the at least one repetition transmission position includes a position in a fourth half-duplex slot when the time domain position at which the first channel is repeatedly transmitted for the first time is in the first full-duplex slot, the first indication information indicates that the fourth half-duplex slot cannot be used together with a full-duplex slot for repetition transmission, and a priority of the first channel is a preset priority.

According to this solution, when the time domain position at which the first channel is repeatedly transmitted for the first time is in the full-duplex slot, if the first indication information indicates that the fourth half-duplex slot cannot be used together with a full-duplex slot for repetition transmission, whether the third half-duplex slot and a full-duplex slot can be used together for repetition transmission may continue to be determined based on the priority of the first channel. For example, when the priority of the first channel indicates that the fourth half-duplex slot can be used together with a full-duplex slot for repetition transmission, the at least one repetition transmission position of the first channel may be determined in the fourth half-duplex slot, so that a latency of repetition transmission of the first channel is reduced, and scheduling flexibility of the network device is also improved.

In a possible design, if the time domain position at which the first channel is repeatedly transmitted for the first time is in a first half-duplex slot, an indication of the first indication information does not need to be considered, and the repetition transmission position of the first channel includes a position in the half-duplex slot and/or a position in the full-duplex slot.

According to this solution, when the time domain position at which the first channel is repeatedly transmitted for the first time is in the half-duplex slot, an indication of the first indication information does not need to be considered, and it is directly learned that the half-duplex slot can be used together with a full-duplex slot for repetition transmission. In other words, in this scenario, the repetition transmission position of the first channel includes a position in the half-duplex slot and/or a position in the full-duplex slot. In this way, a latency of repetition transmission of the first channel can be reduced, a system operation amount is reduced, and system efficiency is improved.

In a possible design, the repetition transmission method provided in this embodiment of this application further includes: receiving fourth indication information from the network device, where the fourth indication information indicates whether a fourth half-duplex slot and a full-duplex slot can be used together for repetition transmission.

In a possible design, the at least one repetition transmission position includes a position in the fourth half-duplex slot and/or a position in the full-duplex slot when the time domain position at which the first channel is repeatedly transmitted for the first time is in the fourth half-duplex slot, and the fourth indication information indicates that the fourth half-duplex slot and a full-duplex slot can be used together for repetition transmission.

According to this solution, when the time domain position at which the first channel is repeatedly transmitted for the first time is in the half-duplex slot, whether the fourth half-duplex slot can be used together with a full-duplex slot for repetition transmission may further continue to be determined based on the fourth indication information. For example, when the fourth indication information indicates that the fourth half-duplex slot can be used together with a full-duplex slot for repetition transmission, the at least one repetition transmission position of the first channel may be determined from the position in the fourth half-duplex slot and/or the position in the full-duplex slot, so that a latency of repetition transmission of the first channel is reduced, and scheduling flexibility of the network device is also improved.

In addition, in this possible implementation, a case in which data is lost during repetition transmission in the full-duplex slot because a bandwidth corresponding to the repeatedly transmitted data is excessively large can be further avoided, or a case in which the network device cannot simultaneously schedule the position in the full-duplex slot to other terminal devices that perform repetition transmission with the network device can be avoided.

In a possible design, the first indication information, the second indication information, the third indication information, and/or the fourth indication information are/is carried in downlink control information (downlink control information, DCI), radio resource control (radio resource control, RRC) information, and/or a system message.

In a possible design, the time domain position at which the first channel is repeatedly transmitted for the first time is carried in DCI or RRC.

According to a second aspect, a repetition transmission method is provided. The method may be performed by a network device, or may be performed by a component in the network device, for example, a processor, a chip, or a chip system in the network device, or may be implemented by a logical module or software that can implement all or some functions of the network device. The method includes: sending first indication information to a terminal device, where the first indication information indicates whether a half-duplex slot and a full-duplex slot can be used together for repetition transmission; determining at least one repetition transmission position of a first channel based on the first indication information and a time domain position at which the first channel is repeatedly transmitted for the first time; and receiving or sending the first channel at the at least one repetition transmission position.

According to this solution, the network device may determine the at least one repetition transmission position of the first channel based on the first indication information and the time domain position at which the first channel is repeatedly transmitted for the first time, to implement repetition transmission of the first channel at a position in the half-duplex slot and/or a position in the full-duplex slot. When the first indication information indicates that the half-duplex slot can be used together with a full-duplex slot for repetition transmission, the at least one repetition transmission position may be determined in the half-duplex slot, and may also be determined in the full-duplex slot, so that a latency of repetition transmission of the first channel is reduced.

In a possible design, the first indication information includes a bitmap whose size is M bits, and each of the M bits corresponds to at least one slot; and when a first bit corresponds to a half-duplex slot, a value of the first bit indicates whether at least one half-duplex slot corresponding to the first bit and a full-duplex slot can be used together for repetition transmission, where the first bit is any one of the M bits, and M is a positive integer.

In a possible design, the first indication information further includes offset information and/or quantity information. The offset information indicates a 1st slot corresponding to a 1st bit in the M bits. The quantity information indicates a total quantity of slots corresponding to the M bits, or the quantity information indicates a quantity of slots corresponding to each bit.

In a possible design, the first indication information further includes first offset information, first quantity information, and/or a first consecutive quantity. The first offset information indicates a 1st slot that can be used together with a full-duplex slot for repetition transmission. The first quantity information indicates a total quantity of slots in one period. The first consecutive quantity indicates a total quantity of slots that can be used together with a full-duplex slot for repetition transmission in the period.

In a possible design, the communication method provided in this embodiment of this application further includes: sending second indication information to the terminal device, where the second indication information indicates whether a first half-duplex slot and a second half-duplex slot can be used together for repetition transmission.

In a possible design, the at least one repetition transmission position includes a position in the first half-duplex slot when the time domain position at which the first channel is repeatedly transmitted for the first time is in a first full-duplex slot, the first indication information indicates that the first half-duplex slot cannot be used together with a full-duplex slot for repetition transmission and indicates that the second half-duplex slot can be used together with a full-duplex slot for repetition transmission, and the second indication information indicates that the first half-duplex slot can be used together with the second half-duplex slot for repetition transmission.

In a possible design, the first indication information includes a first bit value, and the first bit value indicates whether a half-duplex slot and a full-duplex slot can be used together for repetition transmission.

In a possible design, the communication method provided in this embodiment of this application further includes: sending third indication information to the terminal device, where the third indication information indicates whether a third half-duplex slot and a full-duplex slot can be used together for repetition transmission.

In a possible design, the at least one repetition transmission position includes a position in the third half-duplex slot and/or a position in the full-duplex slot when the time domain position at which the first channel is repeatedly transmitted for the first time is in a first full-duplex slot, the first indication information indicates that the third half-duplex slot cannot be used together with a full-duplex slot for repetition transmission, and the third indication information indicates that the third half-duplex slot can be used together with a full-duplex slot for repetition transmission.

In a possible design, the at least one repetition transmission position includes a position in a fourth half-duplex slot when the time domain position at which the first channel is repeatedly transmitted for the first time is in the first full-duplex slot, and the first indication information indicates that the fourth half-duplex slot can be used together with a full-duplex slot for repetition transmission.

In a possible design, the at least one repetition transmission position includes a position in a fourth half-duplex slot when the time domain position at which the first channel is repeatedly transmitted for the first time is in the first full-duplex slot, the first indication information indicates that the fourth half-duplex slot cannot be used together with a full-duplex slot for repetition transmission, and a priority of the first channel is a preset priority.

In a possible design, if the time domain position at which the first channel is repeatedly transmitted for the first time is in a first half-duplex slot, an indication of the first indication information does not need to be considered, and the repetition transmission position of the first channel includes a position in the half-duplex slot and/or a position in the full-duplex slot.

In a possible design, the communication method provided in this embodiment of this application further includes: sending fourth indication information to the terminal device, where the fourth indication information indicates whether a fourth half-duplex slot and a full-duplex slot can be used together for repetition transmission.

In a possible design, the at least one repetition transmission position includes a position in the fourth half-duplex slot and/or a position in the full-duplex slot when the time domain position at which the first channel is repeatedly transmitted for the first time is in the fourth half-duplex slot, and the fourth indication information indicates that the fourth half-duplex slot and a full-duplex slot can be used together for repetition transmission.

In a possible design, the first indication information, the second indication information, the third indication information, and/or the fourth indication information are/is carried in DCI, RRC, and/or a system message.

In a possible design, the time domain position at which the first channel is repeatedly transmitted for the first time is carried in DCI and/or RRC.

For technical effects brought by any possible design of the second aspect, refer to technical effects brought by a corresponding design of the first aspect. Details are not described herein again.

According to a third aspect, a communication apparatus is provided to implement various methods. The communication apparatus may be the terminal device in the first aspect, or an apparatus, for example, a chip or a chip system, included in the terminal device; or the communication apparatus may be the network device in the second aspect, or an apparatus, for example, a chip or a chip system, included in the network device. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations thereof. The transceiver module may include a receiving module and a sending module that are respectively configured to implement a receiving function and a sending function in any one of the foregoing aspects and the possible implementations thereof.

In some possible designs, the transceiver module may include a transceiver circuit, a transceiver, a transceiver machine, or a communication interface.

According to a fourth aspect, a communication apparatus is provided, and includes a processor and a memory. The memory is configured to store computer instructions, and when the processor executes the instructions, the communication apparatus is enabled to perform the method according to any one of the aspects. The communication apparatus may be the terminal device in the first aspect, or an apparatus, for example, a chip or a chip system, included in the terminal device; or the communication apparatus may be the network device in the second aspect, or an apparatus, for example, a chip or a chip system, included in the network device.

According to a fifth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the foregoing aspects. The communication apparatus may be the terminal device in the first aspect, or an apparatus, for example, a chip or a chip system, included in the terminal device; or the communication apparatus may be the network device in the second aspect, or an apparatus, for example, a chip or a chip system, included in the network device.

According to a sixth aspect, a communication apparatus is provided, and includes at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the terminal device in the first aspect, or an apparatus, for example, a chip or a chip system, included in the terminal device; or the communication apparatus may be the network device in the second aspect, or an apparatus, for example, a chip or a chip system, included in the network device.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that when the communication apparatus provided in any one of the third aspect to the sixth aspect is a chip, a sending action/function of the communication apparatus may be understood as output information, and a receiving action/function of the communication apparatus may be understood as input information.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to an eighth aspect, a computer program product including instructions is provided. When the computer program product is run on a communication apparatus, the communication apparatus is enabled to perform the method according to any one of the foregoing aspects.

For technical effects brought by any design of the third aspect to the eighth aspect, refer to technical effects brought by different designs of the first aspect or the second aspect. Details are not described herein again.

## BRIEF DESCRIPTION OF DRAWINGS

FIG. 1 is a diagram of an architecture of a mobile communication system to which an embodiment of this application is applied;

FIG. 2a is a diagram of uplink and downlink resources in an FDD mode according to this application;

FIG. 2b is a diagram of uplink and downlink resources in an SBFD mode according to this application;

FIG. 2c is a diagram of uplink and downlink resources in a TDD mode according to this application;

FIG. 3 is a diagram of interleaved mapping of a frequency domain resource according to this application;

FIG. 4 is a diagram of determining a repetition transmission position of a first channel according to this application;

FIG. 5 is another diagram of determining a repetition transmission position of a first channel according to this application;

FIG. 6 is a flowchart of determining a repetition transmission position of a first channel according to this application;

FIG. 7 is another diagram of determining a repetition transmission position of a first channel according to this application;

FIG. 8a is a diagram of a correspondence between first indication information and each slot according to this application;

FIG. 8b is another diagram of a correspondence between first indication information and each slot according to this application;

FIG. 9a is a diagram of a correspondence between first indication information and a group of slots according to this application;

FIG. 9b is another diagram of a correspondence between first indication information and a group of slots according to this application;

FIG. 10a is a diagram of a correspondence between first indication information and a slot in one period according to this application;

FIG. 10b is another diagram of a correspondence between first indication information and a slot in one period according to this application;

FIG. 11a is a diagram of a correspondence between first indication information and a slot in one period according to this application;

FIG. 11b is another diagram of a correspondence between first indication information and a slot in one period according to this application;

FIG. 12 is another diagram of a correspondence between first indication information and a slot in one period according to this application;

FIG. 13 is a diagram of duplex modes respectively corresponding to a group of slots according to this application;

FIG. 14 is a diagram of a structure of a communication apparatus according to this application;

FIG. 15 is a diagram of a structure of another communication apparatus according to this application; and

FIG. 16 is a diagram of a structure of still another communication apparatus according to this application.

## DESCRIPTION OF EMBODIMENTS

Unless otherwise specified, "/" in descriptions of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists. A and B may be singular or plural.

In the descriptions of this application, "a plurality of" means two or more unless otherwise specified. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c. Herein, a, b, and c may be singular or plural.

In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a relative concept in a specific manner for ease of understanding.

It may be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, both "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, unless otherwise specified, for same or similar parts of embodiments, refer to each other. In embodiments of this application, unless otherwise specified or a logical conflict occurs, terms and/or descriptions in different embodiments are consistent and may be referenced by each other, and different embodiments may be combined based on internal logical relationships between the embodiments to form a new embodiment. The following implementations of this application do not constitute a limitation on the protection scope of this application.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE and NR hybrid networking system, a device-to-device (device-to-device, D2D) system, a machine-to-machine (machine-to-machine, M2M) communication system, the internet of things (Internet of Things, IoT), another next-generation communication system, and the like. Alternatively, the communication system may be a non-3GPP communication system. This is not limited.

The foregoing communication systems applicable to this application are merely examples for description, and the communication systems applicable to this application are not limited thereto. Unified descriptions are provided herein. Details are not described below.

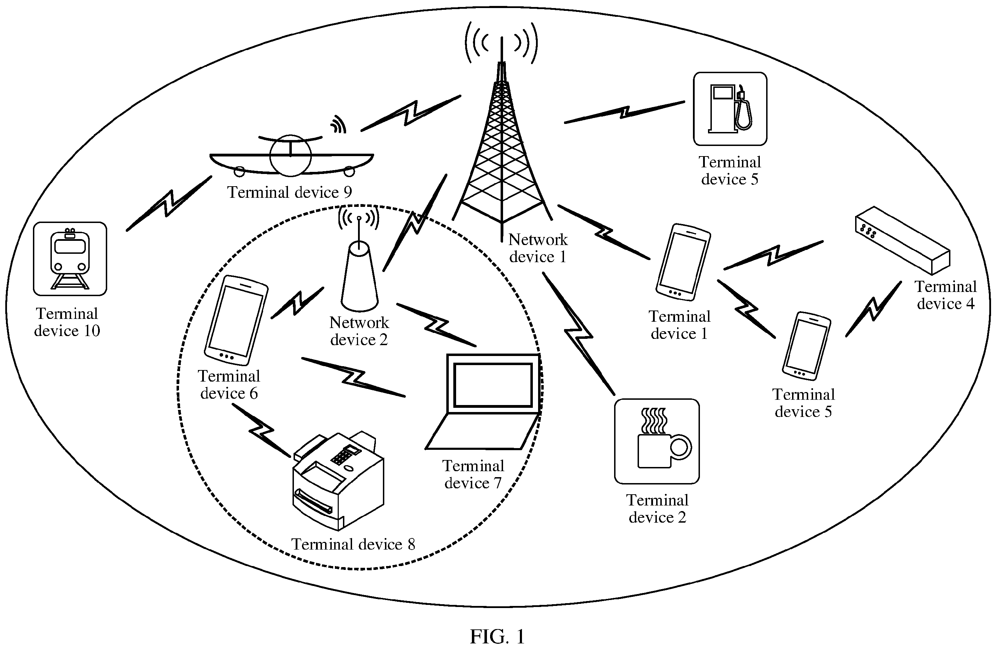

FIG. 1 shows an example of a communication system according to this application. The communication system includes at least one network device and at least one terminal device. Optionally, different terminal devices may communicate with each other.

Optionally, the network device is a device that connects a terminal device to a wireless network, and may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a next generation base station in a 6G system; or may be a transmission reception point (transmission reception point, TRP); or may be a base station in a future evolved public land mobile network (public land mobile network, PLMN); or may be a broadband network gateway (broadband network gateway, BNG), an aggregation switch, or a non-3GPP access device; or may be a radio controller in a cloud radio access network (cloud radio access network, CRAN); or may be an access point (access point, AP) in a Wi-Fi system; or may be a wireless relay node or a wireless backhaul node; or may be a device for implementing a base station function in IoT, a device for implementing a base station function in V2X, a device for implementing a base station function in D2D, or a device for implementing a base station function in M2M. This is not specifically limited in this embodiment of this application.

For example, the base station in this embodiment of this application may include base stations in various forms, for example, a macro base station, a micro base station (also referred to as a small cell), an indoor base station, a relay station, an access point, and a donor node. This is not specifically limited in this embodiment of this application.

Optionally, in a specific implementation, the network device may be a module or a unit that completes some functions of the base station, for example, a central unit (central unit, CU), or the network device may include a CU and a distributed unit (distributed unit, DU). The CU and the DU may be obtained through division based on protocol layers of a wireless network. For example, functions of an RRC protocol layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a media access control (media access control, MAC) layer, and a physical (physical, PHY) layer are set in the DU.

It may be understood that division into processing functions of the CU and the DU based on the protocol layers is merely an example, or division may be performed in another manner. This is not specifically limited in this embodiment of this application.

In some embodiments, the CU may include a CU control plane (CU control plane, CU-CP) and a CU user plane (CU user plane, CU-UP).

Optionally, the terminal device may be a user side device having a wireless transceiver function, and may send a signal to the network device, or receive a signal from the network device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be widely applied to various scenarios, for example, may be a wireless terminal in IoT, V2X, D2D, M2M, MTC, a 5G network, or a future evolved PLMN. The terminal device may be deployed on land, including an indoor or outdoor terminal device, and a handheld or vehicle-mounted terminal device; may be deployed on water (for example, on a ship); or may be deployed in the air (for example, on an airplane, a balloon, or a satellite).

For example, the terminal device may be an uncrewed aerial vehicle, a helicopter, a mechanical arm, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable smart device), a tablet computer or a computer having a wireless transceiver function, a virtual reality (virtual reality, VR) terminal, a wireless terminal in industrial control (industrial control), a wireless terminal in self driving (self driving), a wireless terminal in telemedicine (remote medical), a wireless terminal in a smart grid (smart grid), a wireless terminal in transportation security (transportation safety), a wireless terminal in a smart city (smart city), a wireless terminal in smart home (smart home), a wireless device in a smart home (smart home control system, SCS), a wireless device in a smart office (office automation, OA), a vehicle-mounted terminal, a vehicle having a vehicle-to-vehicle (vehicle-to-vehicle, V2V) communication capability, an intelligent connected vehicle, or an uncrewed aerial vehicle having an uncrewed aerial vehicle to uncrewed aerial vehicle (UAV to UAV, U2U) communication capability. The terminal may be mobile or fixed. This is not specifically limited in this application.

Optionally, roles of the network device and the terminal device may be relative to each other. For example, for a terminal device 9 and a terminal device 10 in FIG. 1, the terminal device 10 needs to access a network device 1 via the terminal device 9. Therefore, for the terminal device 10, the terminal device 9 may be configured as a network device in this case; and for the network device 1, the terminal device 9 is a terminal device in this case, that is, the network device 1 and the terminal device 9 communicate with each other by using a wireless air interface protocol. Optionally, the network device 1 and the terminal device 9 may further communicate with each other by using an interface protocol between network devices. In this case, for the network device 1, the terminal device 9 is also used as a network device. Optionally, communication may be performed between a network device and a terminal device, between network devices, or between terminal devices through a licensed spectrum, or an unlicensed spectrum, or both a licensed spectrum and an unlicensed spectrum. Optionally, communication may be performed between a network device and a terminal device, between network devices, or between terminal devices through a spectrum below 6 gigahertz (gigahertz, GHz), or a spectrum above 6 GHz, or both a spectrum below 6 GHz and a spectrum above 6 GHz. A spectrum resource for wireless communication is not limited in embodiments of this application.

In this embodiment of this application, a function of the network device may be performed by a module (for example, a chip) in the network device, or may be performed by a control subsystem including a function of the network device. The control subsystem including the function of the network device may be a control center in the foregoing application scenarios such as a smart grid, industrial control, smart transportation, and smart city. A function of the terminal device may also be performed by a module (for example, a chip or a modem) in the terminal device, or may be performed by an apparatus including a function of the terminal device.

For ease of understanding the technical solutions in embodiments of this application, conventional technologies of this application are first briefly described below.

1. Duplex mode (Duplex Mode)

Currently, duplex modes in a mobile communication system include full duplex and half duplex. Full duplex (full duplex) means that sending and receiving of a communication device can be performed simultaneously. Half duplex (half duplex) means that sending and receiving of a communication device cannot be performed simultaneously. The communication device includes a network device and/or a terminal device. For example, both the network device and the terminal device are full-duplex, or both the network device and the terminal device are half-duplex, or the network device is full-duplex, and the terminal device is half-duplex, or the network device is half-duplex, and the terminal device is full-duplex.

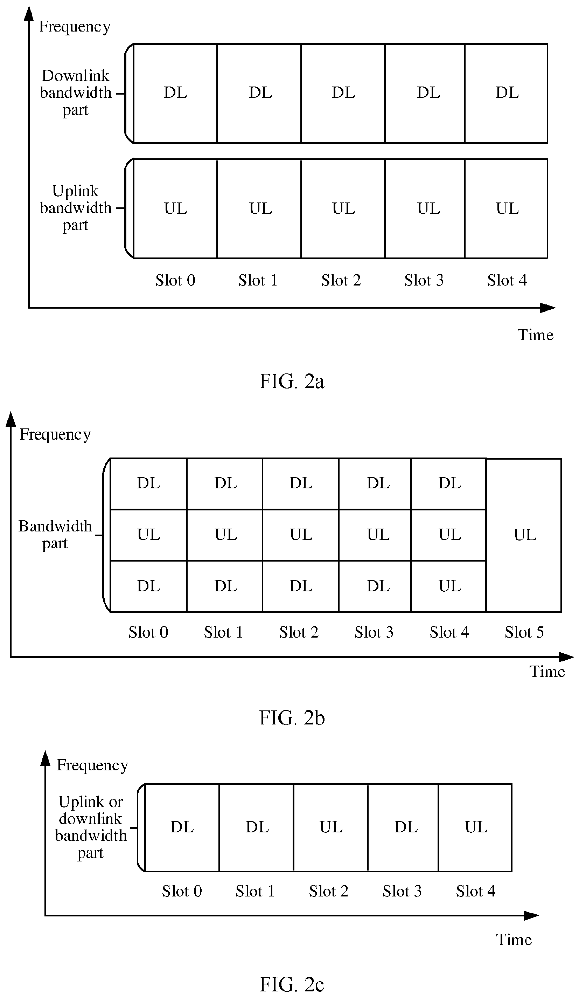

Frequency division duplex (frequency division duplex, FDD): A frequency range of an uplink operating band (uplink operating band, UL) is different from a frequency range of a downlink operating band (downlink operating band, DL), which can be understood as complete non-overlapping. For example, the frequency range of the UL is 1920 MHz to 1980 MHz, and the frequency range of the DL is 2110 MHz to 2170 MHz. Because the UL and the DL are a pair of spectrums, FDD can also be understood as a paired spectrum (paired spectrum). Uplink transmission may be performed in the UL, and downlink transmission may be performed in the DL. In FDD, because the UL and the UL are different, uplink transmission and downlink transmission may be performed simultaneously. For example, as shown in FIG. 2a, a downlink bandwidth part (bandwidth part, BWP) is in a DL, and an uplink BWP is in a UL. In a same slot, a frequency domain resource for downlink transmission is on a downlink BWP, and a frequency domain resource for uplink transmission is on an uplink BWP. Therefore, FDD is full-duplex, and both a terminal device and a network device may be full-duplex.

Time division duplex (time division duplex, TDD): A frequency range of a UL is the same as a frequency range of a DL. For example, the frequency range of the UL is 2010 MHz to 2025 MHz, and the frequency range of the DL is also 2010 MHz to 2025 MHz. Because the UL and the DL are not a pair of spectrums, TDD can also be understood as an unpaired spectrum (unpaired spectrum). Uplink transmission may be performed in the UL, and downlink transmission may be performed in the DL. In TDD, because the frequency range of the UL and the frequency range of the DL are the same, uplink transmission and downlink transmission cannot be performed simultaneously. For example, as shown in FIG. 2c, a downlink BWP and an uplink BWP are the same, and are on a same operating band. UL transmission or DL transmission may be performed on a same symbol in a same slot. Therefore, TDD is half-duplex. For example, both a terminal device and a network device may be half-duplex.

Subband full duplex (subband non-overlapping full duplex, SBFD): a UL and a DL have a same frequency range, that is, are on a same operating band. In this case, uplink transmission and downlink transmission may be performed simultaneously, but a frequency domain resource for uplink transmission is different from a frequency domain resource for downlink transmission. For example, as shown in FIG. 2b, a downlink BWP is the same as an uplink BWP, including that the downlink BWP and the uplink BWP have a same center frequency, and the downlink BWP and the uplink BWP are on a same operating band. A frequency domain resource is divided into three subbands, a middle subband may be used for UL transmission, and an upper subband and a lower subband may be used for DL transmission. In addition, the frequency domain resource may be further divided in another manner. For example, the frequency domain resource is divided into two subbands, one subband is used for DL, and the other subband is used for UL. SBFD is full-duplex. For example, a network device may be full-duplex, and a terminal device may be half-duplex or full-duplex.

2. Slot

One symbol may be an uplink symbol, a downlink symbol, a flexible symbol, or a full-duplex symbol. The uplink symbol is used only for uplink transmission, the downlink symbol is used only for downlink transmission, and the flexible symbol may be used for uplink transmission, or may be used for downlink transmission, but cannot be used for both uplink and downlink transmission. The uplink symbol, the downlink symbol, and the flexible symbol may be understood as half-duplex symbols.

The full-duplex symbol may be used for both uplink and downlink transmission, or the full-duplex symbol may be understood as a symbol that has a resource used for uplink transmission and a resource used for downlink transmission. On the full-duplex symbol, both a network device and a terminal device are full-duplex, and may perform both uplink and downlink transmission. Alternatively, a network device is full-duplex, and may perform both uplink and downlink transmission. However, a terminal device is half-duplex, and can perform only uplink or downlink transmission on the symbol. Frequency domain resources used for both uplink and downlink transmission on the full-duplex symbol cannot overlap.

For example, a quantity of symbols in one slot may be 14, 7, or 2.

Full-duplex slot: The full-duplex slot includes a slot in which all symbols are full-duplex symbols. The full-duplex slot includes an SBFD slot in an SBFD mode, for example, a slot 0 in FIG. 2b. All symbols in the slot 0 are full-duplex symbols.

Half-duplex slot: The half-duplex slot includes a slot in which all symbols are half-duplex symbols. The half-duplex slot includes a TDD slot in a TDD mode, for example, a slot 0 to a slot 4 shown in FIG. 2c.

It should be noted that when a slot includes both a half-duplex symbol and a full-duplex symbol, the slot may be understood as a full-duplex slot or a half-duplex slot.

It should be understood that, in uplink transmission, the terminal device sends uplink information, and the network device receives the uplink information. In downlink transmission, the network device sends downlink information, and the terminal device receives the downlink information.

3. Interleaved mapping of a frequency domain resource

A downlink resource allocation mode may include a downlink resource allocation type 0 and a downlink resource allocation type 1, and the downlink resource allocation type 1 supports interleaved mapping. An uplink resource allocation mode may also include an uplink resource allocation type 0 and an uplink resource allocation type 1, and the uplink resource allocation type 1 does not support interleaved mapping.

Interleaved mapping may mean that resource blocks (resource block, RB) in frequency domain are re-arranged according to a specific rule, and burst error codes occurring in a transmission process are distributed to non-adjacent RBs, that is, the burst error codes are discretized, thereby improving anti-interference performance of coding. In a specific interleaving process, RBs are re-arranged in a specific sequence, and a new bit sequence formed by the re-arranged RBs is an interleaved sequence.

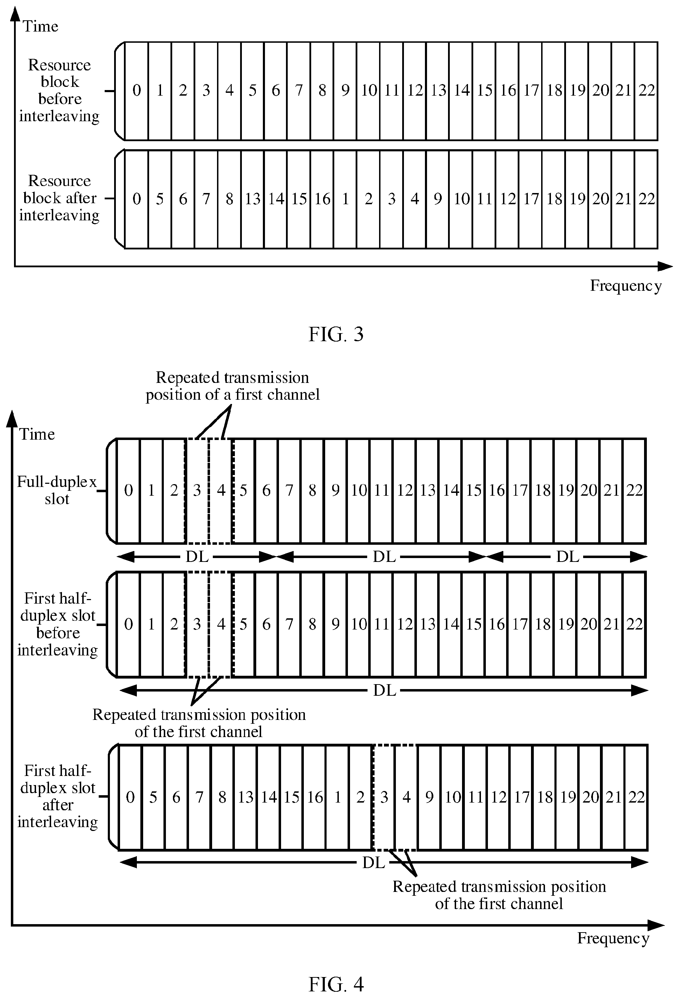

For example, as shown in FIG. 3, one rectangle represents one RB of a frequency domain resource. Before interleaving, RBs 0 to 22 are arranged in sequence. After interleaving, the RBs 1 to 4 are changed to positions of the original RBs 9 to 12, the RBs 5 to 8 are changed to the positions of the original RBs 1 to 4, the RBs 9 to 12 are changed to positions of the original RBs 13 to 16, and the RBs 13 to 16 are changed to the positions of the original RBs 5 to 8.

4. Configured grant (configured grant, CG)

CG-based transmission means that a network device semi-persistently configures a transmission resource (which may also be referred to as a CG resource) for the terminal device by using a configured grant configuration (configured grant config). Currently, there are two types of configured grant:

Configured grant type 1 (Configured grant Type1): A configured grant configuration corresponding to the configured grant type 1 includes all parameters related to the CG resource, such as a frequency domain position and a period of the CG resource. A time domain position of the CG resource may be determined based on a time domain parameter like a period. The resource configured through this type is valid after being configured, without being activated or deactivated.

Configured grant type 2 (Configured grant Type2): A configured grant configuration corresponding to the configured grant type 2 includes some parameters related to the CG resource, such as a period and a quantity of processes. After being configured, the resource configured through this type needs to be activated or deactivated by using L1 signaling or downlink control information DCI. For example, a frequency domain position of the CG resource may be indicated by using the DCI, and a time domain position of the CG resource may be determined based on a period and a time domain parameter provided in the DCI.

In the foregoing two configured grant types, each time domain position determined based on a time domain parameter like a period may be referred to as a transmission occasion (transmission occasion) (which may also be referred to as a sending opportunity or a transmission opportunity), and each transmission occasion corresponds to one transmission grant. The transmission grant may be understood as a time-frequency resource. A frequency domain position of the time-frequency resource may be indicated by using a configured grant configuration, or may be indicated by using DCI. A time domain position of the time-frequency resource is a time domain position of the transmission occasion. The terminal device performs transmission once on each transmission occasion. It should be noted that in this embodiment of this application, "the terminal device performs repetition transmission on a transmission occasion" may be understood as "the terminal device performs repetition transmission on a time-frequency resource corresponding to the transmission occasion". Unified descriptions are provided herein. Details are not described in the following embodiments.

5. Repetition transmission

Repetition transmission may mean that same data is repeatedly transmitted N times during initial scheduling. When a signal environment is poor, repetition transmission can effectively reduce a latency while ensuring reliability. Initial scheduling may be understood as dynamic scheduling.

In LTE, a physical uplink control channel (physical uplink control channel, PUCCH) is used as an example. Transmission lengths of all repeatedly transmitted PUCCHs are consistent. Because NR supports a variable slot structure, uplink-downlink configurations in different slots may be different. How to repeatedly transmit a PUCCH in a slot set with different uplink-downlink configurations needs to be considered. In NR, a simple repetition transmission solution of PUCCHs having a same transmission length and position is used. Each repeatedly transmitted PUCCH carries same uplink control information.

For an unpaired spectrum, if there are no sufficient resources for PUCCH transmission in a current slot, for example, a symbol occupied by the PUCCH is not an uplink symbol or a flexible symbol, or there is a resource conflict between a symbol occupied by the PUCCH and a synchronization signal/physical broadcast channel block (synchronization signal/PBCH block, SSB), the PUCCH is postponed to a next slot that meets a PUCCH resource requirement for repetition transmission until a quantity of repetition transmissions is reached.

For a paired spectrum, starting from a 1st PUCCH transmission slot, repetition transmission is directly performed at a same time-frequency resource position in a plurality of subsequent consecutive slots.

The quantity of repetition transmissions is semi-persistently configured by using higher layer signaling, and the quantity of repetition transmissions is defined as {1, 2, 4, 8}, so that a control channel can implement equivalent LTE uplink coverage in a scenario in which the control channel can support a maximum subcarrier spacing of 120 kHz.

It should be understood that, on a physical uplink shared channel (physical uplink shared channel, PUSCH), transmission lengths of all repeatedly transmitted PUSCHs may be consistent (referred to as a type A repetition manner, type A repetition), or may be inconsistent (referred to as a type B repetition manner, type B repetition). In the type B repetition, when a time domain position of a repeatedly transmitted PUSCH overlaps with some symbols (for example, symbols of an SSB), a plurality of repetitions are obtained through splitting. Repetition after splitting is referred to as actual repetition (actual repetition), and repetition before splitting is referred to as nominal repetition (nominal repetition).

It should be understood that, because both semi-persistent scheduling and CG are periodic, repetition transmission may also be understood as transmitting different data (for example, different transport blocks) on a same resource in different periods.

The foregoing briefly describes related technologies of this application, and the following describes solutions of this application.

Solution 1: When user equipment (user equipment, UE) 1 determines a repetition transmission position of a first channel on which the UE 1 and the network device perform repetition transmission, a duplex mode corresponding to a slot does not need to be identified, and only whether a resource needed for the first channel exists in the slot needs to be considered. For example, as shown in FIG. 4, when interleaved mapping does not exist, the first channel is a downlink channel, and a frequency domain position of the first channel includes an RB 3 and an RB 4, the repetition transmission position of the first channel includes a position in a full-duplex slot and a position in a first half-duplex slot, where the position in the full-duplex slot includes an RB 3 and an RB 4 in the full-duplex slot, and the position in the first half-duplex slot includes an RB 3 and an RB 4 in the first half-duplex slot. Optionally, when interleaved mapping exists, an interleaved mapping rule of the first half-duplex slot is shown in FIG. 4. In interleaved mapping shown in FIG. 4, a position after interleaving in the first half-duplex slot includes original RBs 11 and 12 in the first half-duplex slot. However, uplink transmission is performed on the original RBs 11 and 12 in the full-duplex slot.

In addition, when scheduling the first channel for the UE 1, the network device further needs to schedule, for another UE 2, a repetition transmission position of a second channel for repetition transmission, based on the repetition transmission position of the first channel shown in FIG. 4, if the second channel is a downlink channel, the repetition transmission position of the second channel includes a position in the first half-duplex slot. In this case, the position in the first half-duplex slot does not include the RB 3 and the RB 4 in the first half-duplex slot. Optionally, when interleaved mapping exists in the first half-duplex slot, the interleaved mapping rule of the first half-duplex slot is shown in FIG. 4. In this case, a position in the first half-duplex slot does not include the original RBs 11 and 12 in the first half-duplex slot.

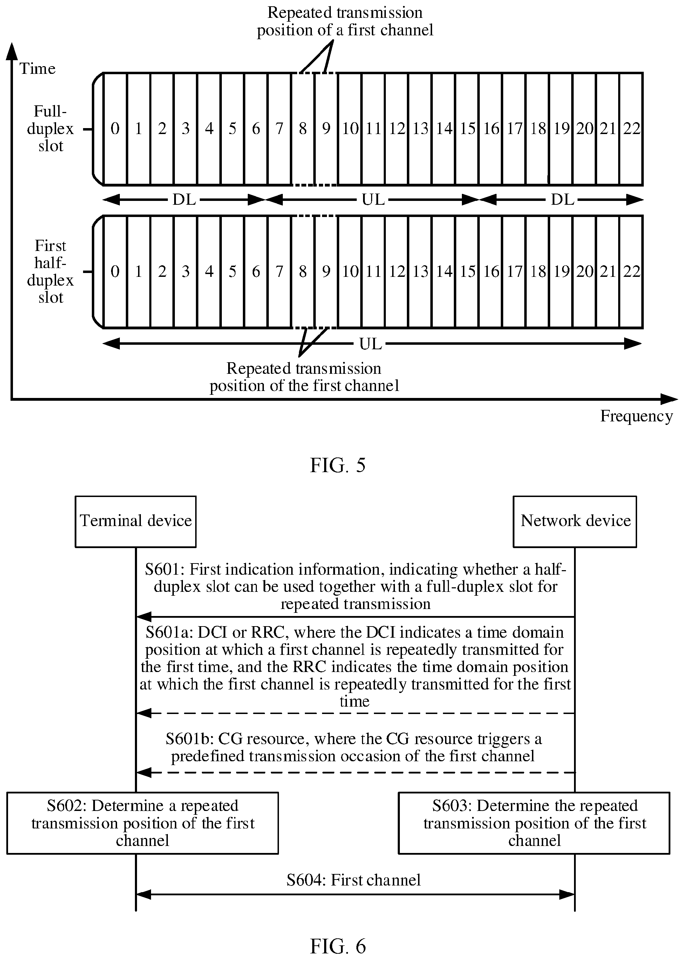

Alternatively, as shown in FIG. 5, when the first channel is an uplink channel, and a frequency domain position of the first channel includes an RB 8 and an RB 9, the repetition transmission position of the first channel includes a position in a full-duplex slot and a position in a first half-duplex slot, where the position in the full-duplex slot includes an RB 8 and an RB 9 in the full-duplex slot, and the position in the first half-duplex slot includes an RB 8 and an RB 9 in the first half-duplex slot. For the repetition transmission position of the first channel shown in FIG. 5, in this case, resource blocks that can be scheduled by the UE 2 in the first half-duplex slot are RBs 0 to 7 and RBs 10 to 22.

Based on knowing the repetition transmission position of the first channel in Solution 1, when a repetition transmission position of a second channel that is of another UE is scheduled, the repetition transmission position of the first channel in the half-duplex slot needs to be avoided, and therefore scheduling complexity of the network device is increased. If interleaved mapping exists, complexity of scheduling the repetition transmission position of the second channel by the network device is further increased.

Solution 2: That the UE 1 determines the repetition transmission position of the first channel on which the UE 1 and the network device perform repetition transmission may further include: The repetition transmission position of the first channel includes only a position in a full-duplex slot, or the repetition transmission position of the first channel includes only a position in a half-duplex slot.

Compared with the method in Solution 1, the method for determining the repetition transmission position of the first channel in Solution 2 reduces complexity to some extent. However, performing repetition transmission based on the repetition transmission position determined in Solution 2, a latency of repetition transmission between the terminal device and the network device is increased.

Based on this, this application provides a repetition transmission method, to reduce a latency of repetition transmission between a terminal device and a network device, and further reduce complexity of scheduling a repetition transmission location by the network device.

With reference to the accompanying drawings, the following describes, in detail by using interaction between a terminal device and a network device as an example, methods provided in embodiments of this application.

It may be understood that, in embodiments of this application, an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all operations in embodiments of this application need to be performed.

It should be noted that, in the following embodiments of this application, names of messages or names of parameters in messages of devices are merely examples, and the messages or the parameters may have other names in specific implementations. This is not specifically limited in embodiments of this application.

FIG. 6 shows a repetition transmission method according to an embodiment of this application. The repetition transmission method includes the following steps.

S601: A network device sends first indication information to a terminal device. Correspondingly, the terminal device receives the first indication information from the network device. The first indication information indicates whether a half-duplex slot and a full-duplex slot can be used together for repetition transmission. It should be understood that the first indication information indicates whether the half-duplex slot can be used together with a full-duplex slot for repetition transmission.

S602: The terminal device determines at least one repetition transmission position of a first channel based on the first indication information and a time domain position at which the first channel is repeatedly transmitted for the first time.

S603: The network device determines the at least one repetition transmission position of the first channel based on the first indication information and the time domain position at which the first channel is repeatedly transmitted for the first time.

S604: The terminal device sends or receives the first channel at the at least one repetition transmission position. Correspondingly, the network device receives or sends the first channel at the at least one repetition transmission position.

It should be noted that the foregoing steps S601 to S604 are merely examples to describe a repetition transmission procedure. An execution sequence between step S601 and step S603 is not limited. For example, step S601 may be performed before step S603; or step S601 may be performed after step S603; or step S601 and step S603 may be performed simultaneously.

The following describes in detail the foregoing steps S601 to S604.

For step S601:

In this embodiment of this application, "used together for repetition transmission" may be understood as follows: If the time domain position at which the first channel is repeatedly transmitted for the first time is a position in the full-duplex slot, both a position in the half-duplex slot after the position in the full-duplex slot and the position in the full-duplex slot may be determined as the repetition transmission position of the first channel. Alternatively, if the time domain position at which the first channel is repeatedly transmitted for the first time is a position in the half-duplex slot, both a position in the full-duplex slot after the position in the half-duplex slot and the position in the half-duplex slot may be determined as the repetition transmission position of the first channel.

Optionally, the half-duplex slot and the full-duplex slot may be slots in a same frame or a same subframe, or the half-duplex slot and the full-duplex slot may be slots in different frames or different subframes.

For step S602 and step S603:

In this embodiment of this application, the first channel is a channel that needs to be repeatedly transmitted between the terminal device and the network device.

For example, a type of the first channel includes but is not limited to a physical downlink shared channel (physical downlink shared channel, PDSCH), a physical uplink shared channel (physical uplink shared channel, PUSCH), a physical downlink control channel (physical downlink control channel, PDCCH), and a physical uplink control channel (physical uplink control channel, PUCCH).

Optionally, for a manner of obtaining the time domain position at which the first channel is repeatedly transmitted for the first time, in a possible implementation, as shown in FIG. 6, before step S602 or step S603, the method may further include the following step S601a:

S601a: The network device sends DCI or RRC to the terminal device. Correspondingly, the terminal device receives the DCI or the RRC from the network device.

The DCI indicates the time domain position at which the first channel is repeatedly transmitted for the first time, and the RRC indicates the time domain position at which the first channel is repeatedly transmitted for the first time.

Optionally, the DCI or the RRC includes time domain position information, and the time domain position information indicates the time domain position at which the first channel is repeatedly transmitted for the first time. Specifically, the time domain position includes a start symbol and a length.

Optionally, the DCI or the RRC may further include frequency domain position information, and the frequency domain position information indicates a frequency domain position at which the first channel is repeatedly transmitted for the first time.

Optionally, the DCI or the RRC may further include a quantity of separation slots, and the quantity of separation slots indicates a quantity of slots that separate a slot in which the DCI or the RRC is located and a slot in which the time domain position at which the first channel is repeatedly transmitted for the first time is located.

In a possible implementation, if the DCI or the RRC does not include a quantity of separation slots, the slot in which the DCI or the RRC is located is a slot in which the time domain position at which the first channel is repeatedly transmitted for the first time is located.

In this manner, the terminal device may determine, by receiving the DCI or the RRC sent by the network device, the time domain position at which the first channel is repeatedly transmitted for the first time, to provide a necessary basis for subsequently determining, by the terminal device, the at least one repetition transmission position of the first channel based on the time domain position at which the first channel is repeatedly transmitted for the first time.

Optionally, for a manner of obtaining the time domain position at which the first channel is repeatedly transmitted for the first time, in another possible implementation, as shown in FIG. 6, before step S602 or step S603, the method may include the following step S601b:

S601b: The network device sends a CG resource to the terminal device. Correspondingly, the terminal device receives the CG resource from the network device. The CG resource triggers the terminal device to use the time domain position that is predefined in a communication protocol between the network device and the terminal device and at which the first channel is repeatedly transmitted for the first time. Triggering may also be understood as that, for a CG, only the time domain position at which the first channel is repeatedly transmitted for the first time is predefined in the protocol. For example, it is agreed that a $1^{st}$ CG transmission occasion in a radio frame 0 is the time domain position at which the first channel is repeatedly transmitted for the first time.

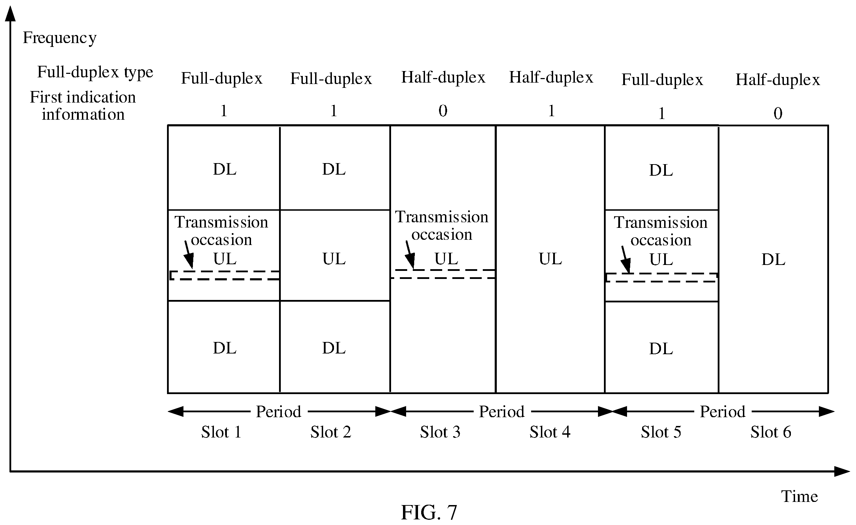

For example, as shown in FIG. 7, it may be predefined in a communication protocol between the network device and the terminal device that the time domain position at which the first channel is repeatedly transmitted for the first time is a position in a slot 1.

Optionally, the CG resource may further trigger the time domain position at which the first channel is repeatedly transmitted for the first time in the DCI or the RRC.

Optionally, in this embodiment of this application, the CG resource may further indicate, by using a parameter like a period, a pre-authorized repetition transmission position of the first channel, that is, a transmission occasion of the first channel. This is not specifically limited in this embodiment of this application.

For example, as shown in FIG. 7, the CG resource indicates that a period is two slots, and a position in a $1^{st}$ slot in the period is a transmission occasion of the first channel. In this case, positions in a slot 1, a slot 3, and a slot 5 are all transmission occasions of the first channel, that is, positions respectively corresponding to dashed-line blocks in FIG. 7.

In this manner, the terminal device may determine, by receiving the CG resource sent by the network device, the time domain position at which the first channel is repeatedly transmitted for the first time, to provide a necessary basis for subsequently determining, by the terminal device, the at least one repetition transmission position of the first channel based on the time domain position at which the first channel is repeatedly transmitted for the first time. In addition, because the CG resource may further indicate, by using a parameter like a period, a pre-authorized repetition transmission position of the first channel, that is, a transmission occasion of the first channel, the terminal device may subsequently determine repetition transmission only in a slot in which the transmission occasion of the first channel is located, to determine the repetition transmission position of the first channel, thereby reducing an operation amount of the terminal device or the network device, and improving running efficiency.

For step S604:

In this embodiment of this application, sending or receiving the first channel may be understood as performing uplink repetition transmission or downlink repetition transmission on the first channel.

Optionally, when the first channel is a downlink channel, the network device may send the first channel at the at least one repetition transmission position. Correspondingly, the terminal device receives the first channel from the network device. Alternatively, when the first channel is an uplink channel, the terminal device may send the first channel at the at least one repetition transmission position. Correspondingly, the network device receives the first channel from the terminal device.

According to this solution, the terminal device or the network device may determine the at least one repetition transmission position of the first channel based on the first indication information and the time domain position at which the first channel is repeatedly transmitted for the first time, to implement repetition transmission of the first channel at a position in the half-duplex slot and/or a position in the full-duplex slot. When the first indication information indicates that the half-duplex slot can be used together with a full-duplex slot for repetition transmission, the at least one repetition transmission position may be determined in the half-duplex slot, and may also be determined in the full-duplex slot, so that a latency of repetition transmission of the first channel is reduced.

The foregoing describes an overall procedure of the repetition transmission method provided in this application. The following describes the first indication information indicating whether a half-duplex slot and a full-duplex slot can be used together for repetition transmission in the foregoing embodiments. For example, the first indication information may be implemented based on the following two scenarios:

Scenario 1: Different slots may correspond to different information indicating whether a half-duplex slot and a full-duplex slot can be used together for repetition transmission.

In a possible implementation, information indicating whether a half-duplex slot and a full-duplex slot can be used together for repetition transmission may be indicated by using a bitmap. For example, the first indication information includes a bitmap whose size is M bits, and each of the M bits corresponds to at least one slot; and when a first bit corresponds to a half-duplex slot, a value of the first bit indicates whether at least one half-duplex slot corresponding to the first bit and a full-duplex slot can be used together for repetition transmission. The first bit is any one of the M bits, and M is a positive integer.

Optionally, in this embodiment of this application, a value of M may be correspondingly set based on a quantity of repetition transmission positions needed by the first channel; or a value of M may be correspondingly set based on a quantity of slots in a subframe or a frame; or a value of M may be correspondingly set based on a quantity of slots in one period. This is not specifically limited in this embodiment of this application.

For example, M may be 10 or 20.

Optionally, in this embodiment of this application, each of the M bits may correspond to one slot. Alternatively, each of the M bits may correspond to a plurality of slots.

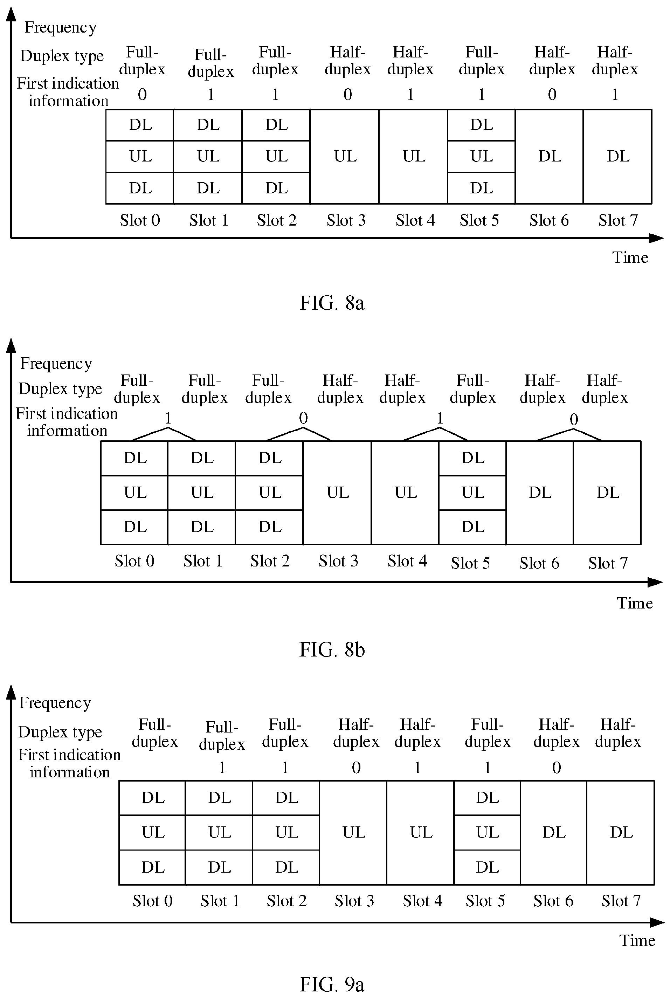

For example, when each bit corresponds to one slot, a correspondence between the first indication information and the slot may be shown in FIG. 8a. In this case, each slot corresponds to one bit value. When each bit corresponds to a plurality of slots, a correspondence between the first indication information and the slots may be shown in FIG. 8b. In this case, two consecutive slots may correspond to one bit value.

As described above, in this embodiment of this application, when the first bit corresponds to the half-duplex slot, the value of the first bit indicates whether the at least one half-duplex slot corresponding to the first bit and a full-duplex slot can be used together for repetition transmission. For example, when the first bit corresponds to the half-duplex slot, if the value of the first bit is a first value, it indicates that the half-duplex slot can be used together with a full-duplex slot for repetition transmission; or if the value of the first bit is a second value, it indicates that the half-duplex slot cannot be used together with a full-duplex slot for repetition transmission. Optionally, the first value may be 1, and the second data may be 0; or the first value may be 0, and the second data may be 1.

Optionally, the bitmap of the M bits is repeated. For example, each of the M bits may correspond to one slot, and M is 10. In this case, when a subcarrier spacing is 15 kHz, the bitmap of the M bits is applied to 10 slots in each frame.

According to this solution, the first indication information is configured for the half-duplex slot and/or the full-duplex slot by using a bitmap. This manner is simple, and is easy to perform an operation by a system, so that a latency of repetition transmission can be reduced, and scheduling complexity of the base station can also be reduced.

Optionally, in this embodiment of this application, when the first indication information includes the bitmap, the first indication information may further include offset information and/or quantity information. The offset information indicates a $1^{st}$ slot corresponding to a $1^{st}$ bit in the bitmap. The quantity information indicates a total quantity of slots corresponding to M bits in the bitmap, or the quantity information indicates a quantity of slots corresponding to each bit.

For example, a case in which the first indication information includes the bitmap and the offset information may be shown in FIG. 9a. If the bitmap in the first indication information is 110110, each bit corresponds to one slot, and the offset information is 1, in FIG. 9a, a slot 0 has no corresponding bit value, and each of a slot 1 to a slot 6 corresponds to one bit value.

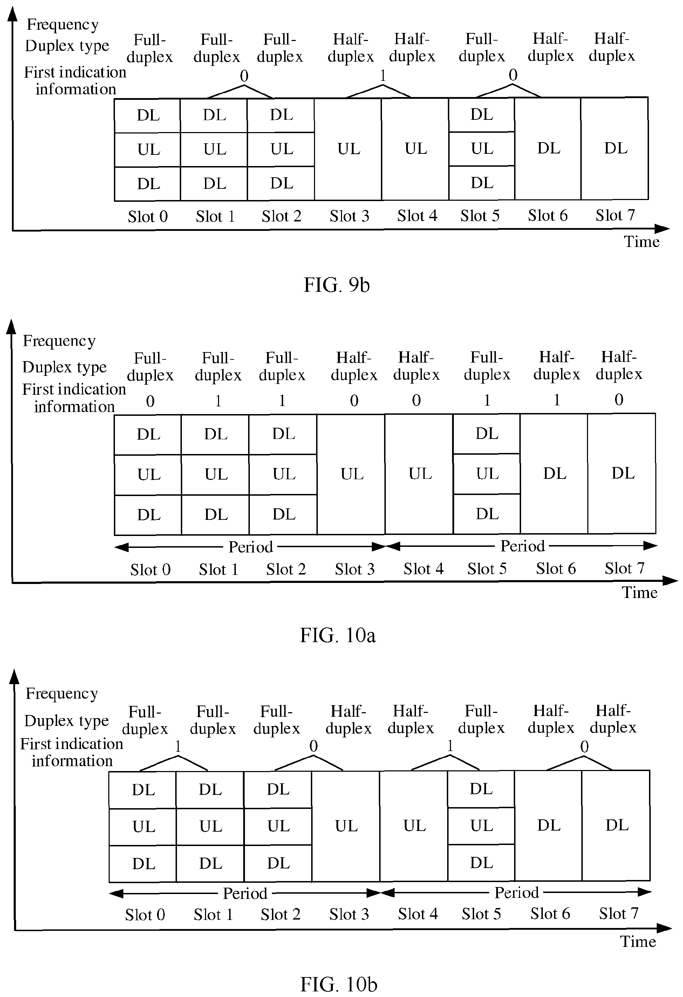

Alternatively, a case in which the first indication information includes the bitmap and the offset information may be shown in FIG. 9b. If each bit corresponds to two slots, the bitmap in the first indication information is 010, and the offset information is 1, in FIG. 9b, a slot 0 has no corresponding bit value, and every two consecutive slots in a slot 1 to a slot 6 correspond to one bit value.

For example, if the quantity information indicates the total quantity of slots corresponding to the M bits in the bitmap, for example, the quantity information is 8, that is, each bit corresponds to one slot, a case in which the first indication information includes the bitmap and the quantity information may be shown in FIG. 8a. In this case, in FIG. 8a, the bitmap in the first indication information is 01101101.

Alternatively, if the quantity information indicates the quantity of slots corresponding to each bit, for example, the quantity information is 1, that is, each bit corresponds to one slot, a case in which the first indication information includes the bitmap and the quantity information may be shown in FIG. 8a. In this case, in FIG. 8a, the bitmap in the first indication information is 01101101.

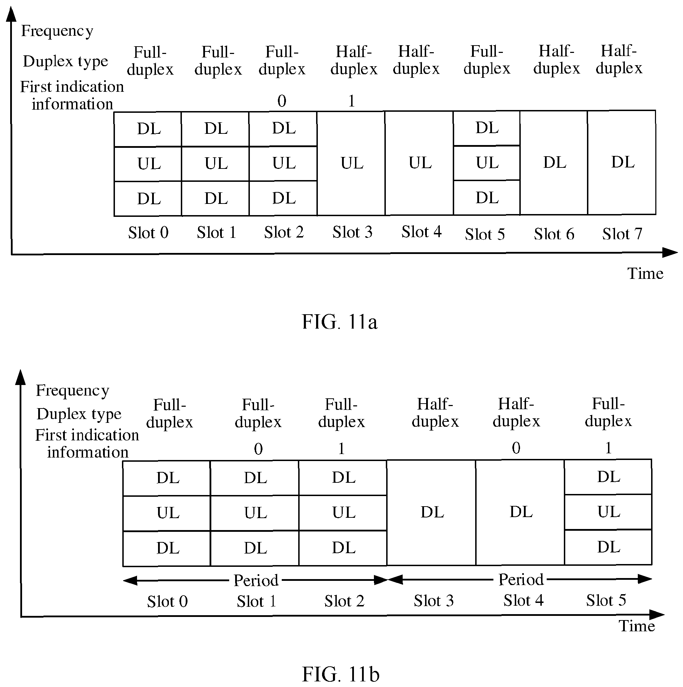

In another example, if the quantity information indicates the total quantity of slots corresponding to the M bits in the bitmap, for example, the quantity information is 8, that is, each bit corresponds to two slots, a case in which the first indication information includes the bitmap and the quantity information may be shown in FIG. 8b. In this case, in FIG. 8b, the bitmap in the first indication information is 1010. Alternatively, if the quantity information indicates the quantity of slots corresponding to each bit, for example, the quantity information is 2, that is, each bit corresponds to two slots, a case in which the first indication information includes the bitmap and the quantity information may be shown in FIG. 8b. In this case, in FIG. 8b, the bitmap in the first indication information is 1010. For example, a case in which the first indication information includes the bitmap, the offset information, and the quantity information may be shown in FIG. 11a. In FIG. 11a, the bitmap in the first indication information is 01, and the quantity information indicates the quantity of slots corresponding to each bit, for example, the quantity information is 1; or the quantity information indicates the total quantity of slots corresponding to the M bits in the bitmap, for example, the quantity information is 2. In addition, it can be learned from FIG. 11a that the offset information is 2.

Optionally, the first indication information may periodically indicate at least one slot in a period.

Optionally, when the first indication information periodically indicates the at least one slot in the period, a length of the period may be preset, or the network device sends length information of the period to the terminal device.

Correspondingly, the terminal device receives the length information from the network device. For example, a case in which the first indication information may indicate all slots in the period may be shown in FIG. 10a. The bitmap in the first indication information is 0110. Therefore, a correspondence between the first indication information and a slot 0 to a slot 7 is shown in FIG. 10a. Alternatively, a case in which the first indication information may indicate all slots in the period may be shown in FIG. 10b. The bitmap in the first indication information is 10. Therefore, bit values separately corresponding to a slot 0 to a slot 7 are shown in FIG. 10b. In both FIG. 10a and FIG. 10b, a length of the period is four slots.

Alternatively, for example, a case in which the first indication information may indicate all slots in the period may be shown in FIG. 11b. The bitmap in the first indication information is 01, the offset information is 1, and the quantity information indicates the total quantity of slots corresponding to the M bits in the bitmap, for example, the quantity information is 2. In this case, bit values respectively corresponding to a slot 0 to a slot 5 are shown in FIG. 11b. In FIG. 11b, a length of a period is three slots.

Alternatively, the bitmap in the first indication information is 01, the offset information is 1, and the quantity information indicates the quantity of slots corresponding to each bit, for example, the quantity information is 1. In this case, bit values separately corresponding to a slot 0 to a slot 5 are shown in FIG. 11b.

According to this solution, the first indication information is configured for the half-duplex slot and/or the full-duplex slot and the half-duplex slot by using a bitmap. This manner is simple, and is easy to perform an operation by a system, so that an error rate and a latency of repetition transmission in a system running process can be reduced, and scheduling complexity of the base station can also be reduced.

According to this solution, the offset information and/or the quantity information is used to assist a bitmap to indicate a plurality of slots, so that a correspondence between the first indication information and the plurality of slots is more flexible. In addition, a quantity of bits in the bitmap can be reduced, so that an effect that is the same as the foregoing effect of using only the bitmap to indicate the plurality of slots is achieved by using a small quantity of bits, thereby reducing a data amount of the first indication information, and improving system operation efficiency.

In another possible implementation, the first indication information may include a first consecutive slot quantity, first offset information, and/or first quantity information. The first consecutive slot quantity indicates a quantity of slots corresponding to the first indication information. The first offset information indicates a 1st slot corresponding to the first indication information. The first quantity information indicates a total quantity of slots in one period, that is, a length of the period.

Optionally, in this embodiment of this application, a relationship between the first offset information and the first quantity information may be shown in Formula (1):

$$(N_{slot}^{frame,u} \cdot n_f + n_{s,f}^u - T_{offset}) mod T_{period} = 0 \qquad \text{Formula (1)}$$

In Formula (1), $N_{slot}^{frame,u}$ represents a quantity of slots in a frame, $n_f$ represents a frame number of a radio frame in which a slot is located, $n_{s,f}^u$ represents a number of a slot corresponding to the slot in the radio frame, $T_{offset}$ represents the first offset information, and $T_{period}$ represents the first quantity information.

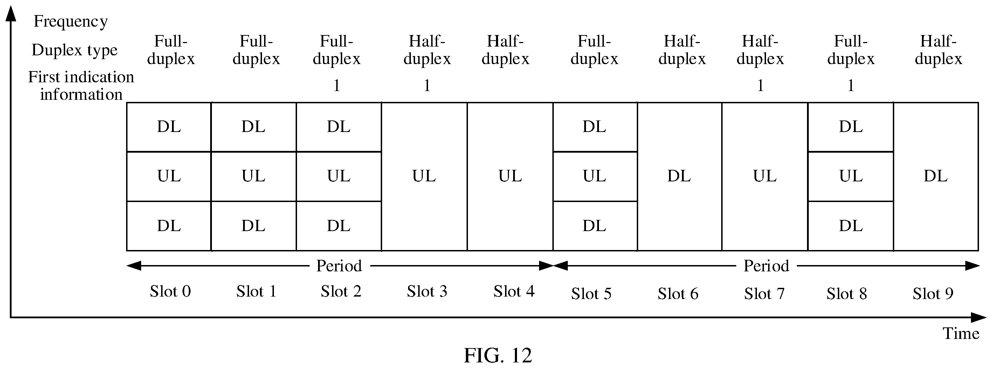

For example, the first channel is a PUSCH. If a bit value in the first indication information is 1, the first indication information indicates that the half-duplex slot can be used together with a full-duplex slot for repetition transmission, the first offset information is 2, the first consecutive slot quantity is 2, and the first quantity information is 5. As shown in FIG. 12, a slot 2, a slot 3, a slot 7, and a slot 8 respectively correspond to information indicating whether a half-duplex slot and a full-duplex slot can be used together for repetition transmission, and the slot 2, the slot 3, the slot 7, and the slot 8 can be used together with a full-duplex slot for repetition transmission.

FIG. 12 shows only a simple example in which the first indication information includes the first consecutive slot quantity, the first offset information, and the first quantity information. In this embodiment of this application, the first consecutive slot quantity, the first offset information, and the first quantity information may exist in an "and/or" manner. Details are not described in this embodiment of this application.

In this embodiment of this application, the half-duplex slot corresponding to the first indication information can be used together with a full-duplex slot for repetition transmission by default. In this case, another half-duplex slot in a period cannot be used together with a full-duplex slot for repetition transmission. Alternatively, the half-duplex slot corresponding to the first indication information cannot be used together with a full-duplex slot for repetition transmission by default. In this case, another half-duplex slot in a period can be used together with a full-duplex slot for repetition transmission.

In this implementation, a plurality of slots may be indicated by using only the first consecutive slot quantity, the first offset information, and/or the first quantity information, so that none of half-duplex slots in the plurality of slots can be used together with a full-duplex slot for repetition transmission, or all of half-duplex slots in the plurality of slots can be used together with a full-duplex slot for repetition transmission, thereby reducing a data amount of the first indication information, and improving system operation efficiency.

Scenario 2: Different slots correspond to same information indicating whether a half-duplex slot and a full-duplex slot can be used together for repetition transmission.

In a possible implementation, the first indication information may include a first bit value. The first bit value indicates whether a half-duplex slot and a full-duplex slot can be used together for repetition transmission.

For example, when the first bit value is a first value, it indicates that a half-duplex slot and a full-duplex slot can be used together for repetition transmission; or when the first bit value is a second value, it indicates that the half-duplex slot cannot be used together with a full-duplex slot for repetition transmission. Optionally, the first value may be 1, and the second value may be 0; or the first value may be 0, and the second value may be 1. In this implementation, a plurality of slots are indicated by using only the first bit value, so that none of half-duplex slots in the plurality of slots can be used together with a full-duplex slot for repetition transmission, or all of half-duplex slots in the plurality of slots can be used together with a full-duplex slot for repetition transmission, thereby reducing a data amount of the first indication information, and improving system operation efficiency.

The foregoing describes a type of the first indication information. The following describes a method for determining a repetition transmission position of a first channel provided in this application.

Manner 1: applicable only to Scenario 1

In a possible implementation, the network device sends second indication information to the terminal device; and correspondingly, the terminal device receives the second indication information from the network device, where the second indication information indicates whether a first half-duplex slot and a second half-duplex slot can be used together for repetition transmission.

Further, in a possible implementation, the at least one repetition transmission position includes a position in the first half-duplex slot when the time domain position at which the first channel is repeatedly transmitted for the first time is in a first full-duplex slot, the first indication information indicates that the first half-duplex slot cannot be used together with a full-duplex slot for repetition transmission and indicates that the second half-duplex slot can be used together with a full-duplex slot for repetition transmission, and the second indication information indicates that the first half-duplex slot can be used together with the second half-duplex slot for repetition transmission.

Optionally, in this implementation, the at least one repetition transmission position further includes a position in the second half-duplex slot and/or a position in the full-duplex slot, and the full-duplex slot includes the first full-duplex slot.

For example, the first channel is a PUSCH. As shown in FIG. 8a, if the time domain position at which the first channel is repeatedly transmitted for the first time is in a slot 0, the slot 0 is a full-duplex slot, and the first indication information indicating a repetition transmission state in each slot is shown in FIG. 8a, when a bit value in the first indication information shown in FIG. 8a is 1, the first indication information indicates that half duplex can be used together with full duplex for repetition transmission; or when a bit value in the first indication information is 0, the first indication information indicates that half-duplex cannot be used together with full duplex for repetition transmission. In this case, it can be learned, based on an indication of the first indication information, that a slot 3 cannot be used together with a full-duplex slot for repetition transmission, and it indicates that a slot 4 can be used together with a full-duplex slot for repetition transmission. In this case, further determining may be performed based on the second indication information. If the second indication information indicates that the slot 3 can be used together with the slot 4 for repetition transmission, the at least one repetition transmission position of the first channel may be determined in the slot 0, a slot 1, a slot 2, the slot 3, the slot 4, and a slot 5.

Alternatively, further, in another possible implementation, the at least one repetition transmission position includes a position in the second half-duplex slot and/or a position in the full-duplex slot when the time domain position at which the first channel is repeatedly transmitted for the first time is in a first full-duplex slot, the first indication information indicates that the first half-duplex slot cannot be used together with a full-duplex slot for repetition transmission and indicates that the second half-duplex slot can be used together with a full-duplex slot for repetition transmission, and the second indication information indicates that the first half-duplex slot cannot be used together with the second half-duplex slot for repetition transmission.

For example, the first channel is a PUSCH. As shown in FIG. 8a, it can be learned, based on an indication of the first indication information, that a slot 3 cannot be used together with a full-duplex slot for repetition transmission, and it indicates that a slot 4 can be used together with a full-duplex slot for repetition transmission. In this case, further determining may be performed based on the second indication. If the second indication information indicates that the slot 3 cannot be used together with the slot 4 for repetition transmission, the at least one repetition transmission position of the first channel may be determined in a slot 0, a slot 1, a slot 2, the slot 4, and a slot 5.

In this implementation, when the time domain position at which the first channel is repeatedly transmitted for the first time is in the full-duplex slot, if it is learned, based on the first indication information, that the first half-duplex slot cannot be used together with a full-duplex slot for repetition transmission, and the second half-duplex slot can be used together with a full-duplex slot for repetition transmission, determining may continue to be performed based on the second indication information, and whether the first half-duplex slot and a full-duplex slot can be used together for repetition transmission is finally determined based on the second indication information. For example, when the second indication information indicates that the first half-duplex slot can be used together with the second half-duplex slot for repetition transmission, the at least one repetition transmission position of the first channel may be determined in the first half-duplex slot and/or the second half-duplex slot, so that a latency of repetition transmission of the first channel is reduced, and scheduling flexibility of the network device is also improved.

Manner 2: applicable only to Scenario 2

In a possible implementation, the network device sends third indication information to the terminal device, and correspondingly, the terminal device receives the third indication information from the network device, where the third indication information indicates whether a third half-duplex slot and a full-duplex slot can be used together for repetition transmission. Further, the at least one repetition transmission position includes a position in the third half-duplex slot and/or a position in the full-duplex slot when the time domain position at which the first channel is repeatedly transmitted for the first time is in a first full-duplex slot, the first indication information indicates that the third half-duplex slot cannot be used together with a full-duplex slot for repetition transmission, and the third indication information indicates that the third half-duplex slot can be used together with a full-duplex slot for repetition transmission.

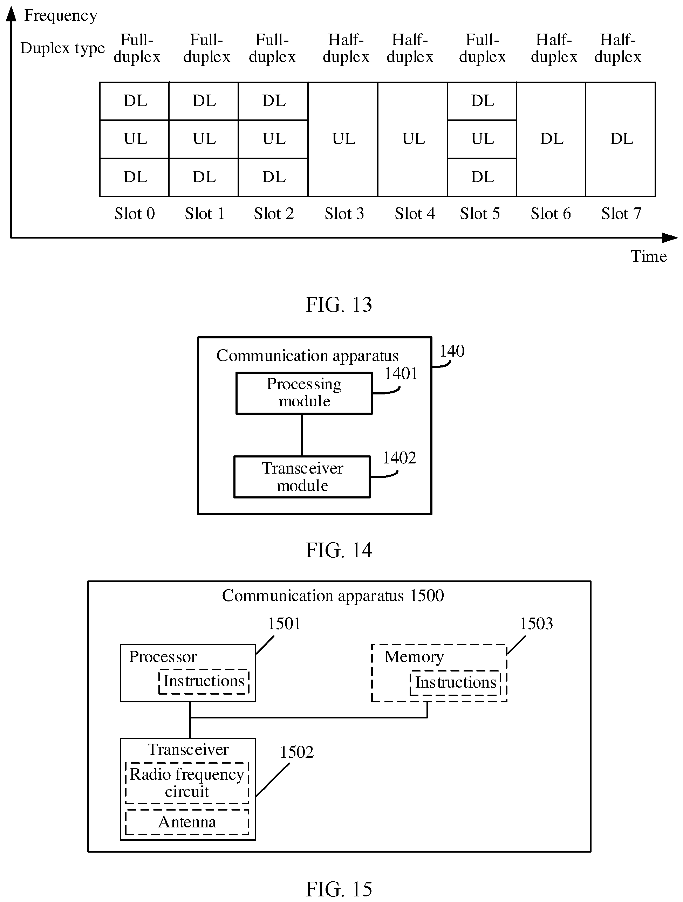

For example, the first channel is a PUSCH. As shown in FIG. 13, the time domain position at which the first channel is repeatedly transmitted for the first time is in a slot 0, and the slot 0 is a full-duplex slot. When the first indication information indicates that the half-duplex slot cannot be used together with a full-duplex slot for repetition transmission, it indicates that an uplink slot 3 and an uplink slot 4 cannot be used together with a full-duplex slot for repetition transmission. In this case, further determining may be performed based on the third indication. If the third indication information indicates that the slot 3 can be used together with a full-duplex slot for repetition transmission, and indicates that the slot 4 can be used together with a full-duplex slot for repetition transmission, the at least one repetition transmission position of the first channel may be determined in the slot 0, a slot 1, a slot 2, the slot 3, the slot 4, and a slot 5.

Alternatively, further, in another possible implementation, the at least one repetition transmission position includes a position in the full-duplex slot when the time domain position at which the first channel is repeatedly transmitted for the first time is in a first full-duplex slot, the first indication information indicates that the third half-duplex slot cannot be used together with a full-duplex slot for repetition transmission, and the third indication information indicates that the third half-duplex slot cannot be used together with a full-duplex slot for repetition transmission.

For example, the first channel is a PUSCH. As shown in FIG. 13, the time domain position at which the first channel is repeatedly transmitted for the first time is in a slot 0, and the slot 0 is a full-duplex slot. When the first indication information indicates that the half-duplex slot cannot be used together with a full-duplex slot for repetition transmission, further determining may be performed based on the third indication. If the third indication information indicates that a slot 3 cannot be used together with a full-duplex slot for repetition transmission, and indicates that a slot 4 cannot be used together with a full-duplex slot for repetition transmission, the at least one repetition transmission position of the first channel may be determined in the slot 0, a slot 1, a slot 2, and a slot 5.

Alternatively, further, in another possible implementation, the at least one repetition transmission position includes a position in the third half-duplex slot and/or a position in the full-duplex slot when the time domain position at which the first channel is repeatedly transmitted for the first time is in a first full-duplex slot, the first indication information indicates that the third half-duplex slot can be used together with a full-duplex slot for repetition transmission, and the third indication information indicates that the third half-duplex slot can be used together with a full-duplex slot for repetition transmission.

For example, the first channel is a PUSCH. As shown in FIG. 13, the time domain position at which the first channel is repeatedly transmitted for the first time is in a slot 0, and the slot 0 is a full-duplex slot. When the first indication information indicates that the half-duplex slot can be used together with a full-duplex slot for repetition transmission, it indicates that an uplink slot 3 and an uplink slot 4 can be used together with a full-duplex slot for repetition transmission. In this case, further determining may be performed based on the third indication. If the third indication information indicates that the slot 3 can be used together with a full-duplex slot for repetition transmission, and indicates that the slot 4 can be used together with a full-duplex slot for repetition transmission, the at least one repetition transmission position of the first channel may be determined in the slot 0, a slot 1, a slot 2, the slot 3, the slot 4, and a slot 5.

Alternatively, further, in another possible implementation, the at least one repetition transmission position includes a position in the full-duplex slot when the time domain position at which the first channel is repeatedly transmitted for the first time is in a first full-duplex slot, the first indication information indicates that the third half-duplex slot can be used together with a full-duplex slot for repetition transmission, and the third indication information indicates that the third half-duplex slot cannot be used together with a full-duplex slot for repetition transmission.

For example, the first channel is a PUSCH. As shown in FIG. 13, the time domain position at which the first channel is repeatedly transmitted for the first time is in a slot 0, and the slot 0 is a full-duplex slot. When the first indication information indicates that the half-duplex slot can be used together with a full-duplex slot for repetition transmission, it indicates that an uplink slot 3 and an uplink slot 4 can be used together with a full-duplex slot for repetition transmission. In this case, further determining may be performed based on the third indication. If the third indication information indicates that the slot 3 cannot be used together with a full-duplex slot for repetition transmission, and indicates that the slot 4 cannot be used together with a full-duplex slot for repetition transmission, the at least one repetition transmission position of the first channel may be determined in the slot 0, a slot 1, a slot 2, and a slot 5.

In this implementation, when the time domain position at which the first channel is repeatedly transmitted for the first time is in the full-duplex slot, if it is learned, based on the first indication information, that the third half-duplex slot cannot be used together with a full-duplex slot for repetition transmission, determining may continue to be performed based on the third indication information, and whether the third half-duplex slot and a full-duplex slot can be used together for repetition transmission is finally determined based on the third indication information. For example, when the third indication information indicates that the third half-duplex slot can be used together with a full-duplex slot for repetition transmission, the at least one repetition transmission position of the first channel may be determined in the third half-duplex slot and/or the full-duplex slot, so that a latency of repetition transmission of the first channel is reduced, and scheduling flexibility of the network device is also improved.

Manner 3: applicable to both Scenario 1 and Scenario 2

In a first possible implementation, when the time domain position at which the first channel is repeatedly transmitted for the first time is in a first full-duplex slot, whether a half-duplex slot after the first full-duplex slot can be used together with a full-duplex slot for repetition transmission needs to be determined based on an indication of the first indication information.

In a possible case, when the first indication information indicates that a fourth half-duplex slot can be used together with a full-duplex slot for repetition transmission, the at least one repetition transmission position includes a position in the fourth half-duplex slot.

Optionally, in this implementation, the at least one repetition transmission position further includes a position in the full-duplex slot, and the full-duplex slot includes the first full-duplex slot.

For example, the first channel is a PUSCH. In Scenario 1, the first indication information corresponding to each slot is shown in FIG. 8a. The time domain position at which the first channel is repeatedly transmitted for the first time is in a slot 0, and the slot 0 is a full-duplex slot. In this case, whether a slot 3 and a slot 4 can be used together with a full-duplex slot for repetition transmission needs to be determined based on an indication of the first indication information only for the slot 3 and the slot 4. It can be learned from the first indication information in FIG. 8a that the slot 3 cannot be used together with a full-duplex slot for repetition transmission, and the slot 4 can be used together with a full-duplex slot for repetition transmission. Therefore, the at least one repetition transmission position of the first channel may be determined in the slot 0, a slot 1, a slot 2, the slot 4, and a slot 5. It should be understood that the first indication information is applied only to a half-duplex slot. For a full-duplex slot, the first indication information may be ignored, and all full-duplex slots may be used together for repetition transmission by default.

Alternatively, for example, the first channel is a PUSCH. In Scenario 2, as shown in FIG. 13, the time domain position at which the first channel is repeatedly transmitted for the first time is in a slot 0, and the slot 0 is a full-duplex slot. In this case, whether a slot 3 and a slot 4 can be used together with a full-duplex slot for repetition transmission needs to be determined based on an indication of the first indication information only for the slot 3 and the slot 4. In this case, if the first indication information indicates that the half-duplex slot can be used together with a full-duplex slot for repetition transmission, the at least one repetition transmission position of the first channel may be determined in the slot 0, a slot 1, a slot 2, the slot 3, the slot 4, and a slot 5. If the first indication information indicates that the half-duplex slot cannot be used together with a full-duplex slot for repetition transmission, the at least one repetition transmission position of the first channel may be determined in the slot 0, the slot 1, the slot 2, and the slot 5.

In this possible case, when the time domain position at which the first channel is repeatedly transmitted for the first time is in a full-duplex slot, the first indication information indicates whether a half-duplex slot after the full-duplex slot can be used together with a full-duplex slot for repetition transmission. The first indication information may indicate that at least one or all half-duplex slots after the full-duplex slot can be used together with a full-duplex slot for repetition transmission; or the first indication information may indicate that at least one or all half-duplex slots after the full-duplex slot cannot be used together with a full-duplex slot for repetition transmission. When the first indication information may indicate that at least one or all half-duplex slots after the full-duplex slot can be used together with a full-duplex slot for repetition transmission, the at least one repetition transmission position of the first channel may be determined in the at least one or all half-duplex slots and/or the full-duplex slot, so that a latency of repetition transmission of the first channel is reduced, and scheduling flexibility of the network device is also improved.

Optionally, when the procedure of the repetition transmission method further includes step S601b shown in FIG.

6, further, if the first indication information indicates that a half-duplex slot in which a transmission occasion of the first channel is located can be used together with a full-duplex slot for repetition transmission, the at least one repetition transmission position includes a position in the half-duplex slot.

For example, the first channel is a PUSCH. As shown in FIG. 7, when a bit value in the first indication information is 1, the first indication information indicates that half duplex can be used together with full duplex for repetition transmission; or when a bit value in the first indication information is 0, the first indication information indicates that half duplex cannot be used together with full duplex for repetition transmission. The transmission occasion of the first channel is separately in a slot 1, a slot 3, and a slot 5. If the time domain position at which the first channel is repeatedly transmitted for the first time is in the slot 1, because both the slot 1 and the slot 5 are full-duplex slots, the slot 3 is a half-duplex slot, and the first indication information in the slot 3 indicates that the slot 3 cannot be used together with a full-duplex slot for repetition transmission, the repetition transmission position of the first channel includes a position in the slot 1 and a position in the slot 5, that is, positions corresponding to dashed-line boxes in the slot 1 and the slot 5 in FIG. 7.

In this manner, when the time domain position at which the first channel is repeatedly transmitted for the first time is in the full-duplex slot, if the repetition transmission method further includes step S601b, that is, the network device sends the transmission occasion of the first channel to the terminal device, the network device may determine only a bit value corresponding to a half-duplex slot in which the transmission occasion of the first channel is located, to determine the repetition transmission position of the first channel, thereby reducing an operation amount of the terminal device or the network device, and improving running efficiency.

In another possible case, the at least one repetition transmission position includes a position in a fourth half-duplex slot when the time domain position at which the first channel is repeatedly transmitted for the first time is in the first full-duplex slot, the first indication information indicates that the fourth half-duplex slot cannot be used together with a full-duplex slot for repetition transmission, and a priority of the first channel is a preset priority. The preset priority may be a high priority or a low priority.

Optionally, in this implementation, the at least one repetition transmission position further includes a position in the full-duplex slot, and the full-duplex slot includes the first full-duplex slot.

For example, the first channel is a PUSCH. The first indication information corresponding to each slot is shown in FIG. 8a. The time domain position at which the first channel is repeatedly transmitted for the first time is in a slot 0, and the slot 0 is a full-duplex slot. In this case, whether a slot 3 and a slot 4 can be used together with a full-duplex slot for repetition transmission needs to be determined based on an indication of the first indication information only for the slot 3 and the slot 4. In addition, it can be learned from the first indication information in FIG. 8a that the slot 3 cannot be used together with a full-duplex slot for repetition transmission, and the slot 4 can be used together with a full-duplex slot for repetition transmission. If a priority of the first channel is a high priority, the at least one repetition transmission position of the first channel may be determined in the slot 0, a slot 1, a slot 2, the slot 3, the slot 4, and a slot 5. Alternatively, if a priority of the first channel is a low priority, the at least one repetition transmission position of the first channel may be determined in the slot 0, a slot 1, a slot 2, the slot 4, and a slot 5.

In this possible implementation, when the time domain position at which the first channel is repeatedly transmitted for the first time is in the full-duplex slot, if the first indication information indicates that the fourth half-duplex slot cannot be used together with a full-duplex slot for repetition transmission, determining may continue to be performed based on the priority of the first channel, and whether the fourth half-duplex slot and a full-duplex slot can be used together for repetition transmission is finally determined based on the priority of the first channel. For example, when the priority of the first channel is a high priority, the at least one repetition transmission position of the first channel may be determined in the fourth half-duplex slot and/or the full-duplex slot, so that a latency of repetition transmission of the first channel is reduced, and scheduling flexibility of the network device is also improved.

In a second possible implementation, when the time domain position at which the first channel is repeatedly transmitted for the first time is in the first half-duplex slot, an indication of the first indication information does not need to be considered, that is, the first indication information may be ignored. The repetition transmission position of the first channel includes a position in the half-duplex slot and/or a position in the full-duplex slot. To be specific, when the terminal device receives the first indication information and third indication information, the terminal device ignores the first indication information, and determines the at least one repetition transmission position of the first channel based on only the third indication information. For example, when the first indication information is carried in RRC, and the second indication information is carried in DCI, the terminal device determines the at least one repetition transmission position of the first channel based on only the DCI.

For example, the first channel is a PUSCH. The first indication information corresponding to each slot is shown in FIG. 13. If the time domain position at which the first channel is repeatedly transmitted for the first time is in a slot 3, the at least one repetition transmission position of the first channel may be determined in the slot 3, a slot 4, and a slot 5.

In this possible implementation, when the time domain position at which the first channel is repeatedly transmitted for the first time is in the half-duplex slot, it is directly learned, without considering an indication of the first indication information, that the half-duplex slot can be used together with a full-duplex slot for repetition transmission. Therefore, the repetition transmission position of the first channel includes a position in the half-duplex slot and/or a position in the full-duplex slot, so that a latency of repetition transmission of the first channel is reduced, a system operation amount is reduced, and system efficiency is improved.

In this implementation, further, the network device sends fourth indication information to the terminal device, and correspondingly, the terminal device receives the fourth indication information from the network device, where the fourth indication information indicates whether the fourth half-duplex slot and a full-duplex slot can be used together for repetition transmission.

In a possible case, when the time domain position at which the first channel is repeatedly transmitted for the first time is in the fourth half-duplex slot, and the fourth indication information indicates that the fourth half-duplex slot can be used together with a full-duplex slot for repetition transmission, the at least one repetition transmission position includes a position in the fourth half-duplex slot.

Optionally, in this implementation, the at least one repetition transmission position further includes a position in the full-duplex slot.

For example, the first channel is a PUSCH. The first indication information corresponding to each slot is shown in FIG. 13. The time domain position at which the first channel is repeatedly transmitted for the first time is in a slot 3, and the fourth indication information indicates that the slot 3 can be used together with a full-duplex slot for repetition transmission. In this case, the at least one repetition transmission position of the first channel may be determined in the slot 3, a slot 4, and a slot 5.

In another possible case, when the time domain position at which the first channel is repeatedly transmitted for the first time is in the fourth half-duplex slot, and the fourth indication information indicates that the fourth half-duplex slot cannot be used together with a full-duplex slot for repetition transmission, the at least one repetition transmission position includes a position in the fourth half-duplex slot.

For example, the first channel is a PUSCH. The first indication information corresponding to each slot is shown in FIG. 13. The time domain position at which the first channel is repeatedly transmitted for the first time is in a slot 3, and the fourth indication information indicates that the slot 3 cannot be used together with a full-duplex slot for repetition transmission. In this case, the at least one repetition transmission position of the first channel may be determined in the slot 3 and a slot 4.

In this possible implementation, when the time domain position at which the first channel is repeatedly transmitted for the first time is in the half-duplex slot, whether the fourth half-duplex slot can be used together with a full-duplex slot for repetition transmission may further continue to be determined based on the fourth indication information. For example, when the fourth indication information indicates that the fourth half-duplex slot can be used together with a full-duplex slot for repetition transmission, the at least one repetition transmission position of the first channel may be determined from the position in the fourth half-duplex slot and/or the position in the full-duplex slot, so that a latency of repetition transmission of the first channel is reduced, and scheduling flexibility of the network device is also improved.

In addition, in this possible implementation, a case in which data is lost during repetition transmission in the full-duplex slot because a bandwidth corresponding to the repeatedly transmitted data is excessively large can be further avoided, or a case in which the network device cannot simultaneously schedule the position in the full-duplex slot to other terminal devices that perform repetition transmission with the network device can be avoided.

Optionally, the first indication information, the second indication information, the third indication information, and/or the fourth indication information provided in embodiments of this application may be carried in DCI, RRC, and/or a system message, and sent to the terminal device. Correspondingly, the terminal device receives the DCI, the RRC, and/or the system message from the network device.

For example, the first indication information is carried in RRC, and the second indication information and/or the third indication information are/is carried in DCI.

For example, a first bit value is carried in the DCI. Specifically, the first bit value may be carried in a redundant bit in a frequency domain resource allocation field of the DCI.

Optionally, when the first bit value is carried in the DCI, specifically, the first bit value may be carried in at least one format of the DCI.

For example, when the first bit value is carried in a format 1 of the DCI, a format other than the format 1 indicates, by default, that the half-duplex slot can be used together with a full-duplex slot for repetition transmission. For example, as shown in FIG. 13, if the terminal device receives a format 0 of the DCI, and the time domain position at which the first channel is repeatedly transmitted for the first time is in a slot 0, the terminal device may determine at least one repetition transmission position in the slot 0, a slot 1, a slot 2, a slot 3, a slot 4, and a slot 5.

Alternatively, if the terminal device receives a format 1 of the DCI, the time domain position at which the first channel is repeatedly transmitted for the first time is in a slot 0, and the first bit value indicates that the half-duplex slot can be used together with a full-duplex slot for repetition transmission, the terminal device may determine at least one repetition transmission position in the slot 0, a slot 1, a slot 2, a slot 3, a slot 4, and a slot 5.

The foregoing embodiment describes the method for determining a repetition transmission position of a first channel. According to the method for determining a repetition transmission position of a first channel provided in the foregoing embodiment of this application, in embodiments of this application, the repetition transmission position of the first channel may be further determined by using the following method.

Optionally, the repetition transmission method provided in this embodiment of this application further includes: The network device sends a quantity of repetition transmissions of the first channel to the terminal device; and correspondingly, the terminal device receives the quantity of repetition transmissions of the first channel from the network device.

Further, in a possible implementation, the terminal device or the network device may use a first slot as a start position, and then determine at least one repetition transmission position in a slot after the first slot, where the first slot is a time domain position at which the first channel is repeatedly transmitted for the first time. The at least one repetition transmission position is determined in the slot after the first slot, and whether a slot can be used for repetition transmission of the first channel may be determined for consecutive slots after the first slot one by one.

For example, the first channel is a PUSCH. As shown in FIG. 8a, when the time domain position at which the first channel is repeatedly transmitted for the first time is in a slot 0, and a quantity of repetition transmissions is 5, based on the first indication information shown in FIG. 8a, positions in the slot 0, a slot 1, and a slot 2 may be used as repetition transmission positions of the first channel that are determined in this embodiment of this application. Then, for a slot 3, based on an indication of the first indication information, the slot 3 cannot be used together with a full-duplex slot for repetition transmission, that is, the slot 3 is not used for repetition transmission of the first channel. Based on the indication of the first indication information, a slot 4 can be used together with a full-duplex slot for repetition transmission, that is, the slot 4 may be used for repetition transmission of the first channel. Therefore, a position in the slot 4 may be used as the repetition transmission position of the first channel that is determined in this embodiment of this application. In this case, because there are only four determined slot positions, it may further continue to be determined that a position in a slot 5 may be used for repetition transmission of the first channel, so that transmission can be performed five times. In this case, positions in the slot 0, the slot 1, the slot 2, the slot 4, and the slot 5 are used as repetition transmission positions of the first channel that are finally determined in this embodiment of this application. It should be understood that, such a manner of sequentially determining repetition transmission positions may be referred to as postpone (postpone).

Alternatively, in a possible implementation, the terminal device or the network device may use a first slot as a start position, and then determine at least one repetition transmission position in N-1 consecutive slots after the first slot, where the first slot is a time domain position at which the first channel is repeatedly transmitted for the first time. N is a quantity of repetitions.

For example, the first channel is a PUSCH. As shown in FIG. 8a, when the time domain position at which the first channel is repeatedly transmitted for the first time is in a slot 0, and a quantity of repetition transmissions is 5, specific slots that can be used for repetition transmission of the first channel are determined in a slot 1, a slot 2, a slot 3, and a slot 4. Based on the first indication information shown in FIG. 8a, positions in the slot 0, the slot 1, the slot 2, and the slot 4 may be used as repetition transmission positions of the first channel that are finally determined in this embodiment of this application. Therefore, only four positions for repetition transmission are determined, and repetition transmission in slot 3 is discarded.

Optionally, the quantity of repetitions of the first channel may be indicated by using DCI and/or RRC.

In a possible implementation, when the first indication information is in the foregoing form of the bitmap, and the time domain position at which the first channel is repeatedly transmitted for the first time is in the full-duplex slot, in this embodiment of this application, the repetition transmission position of the first channel may be further determined by using the following method.

Optionally, when a half-duplex slot has no corresponding bit value, it is determined that the half-duplex slot cannot be used together with a full-duplex slot for repetition transmission; or it is determined that the half-duplex slot can be used together with a full-duplex slot for repetition transmission.

The foregoing manner of determining the position at which the first channel is repeatedly transmitted for the first time is only for repetition transmission between one terminal device and the network device. In this embodiment of this application, repetition transmission between a plurality of terminal devices and the network device is further supported. An implementation process thereof is similar to the foregoing step, and only a determined repetition transmission position needs to be avoided. In other words, repetition transmission positions in this scenario include a repetition transmission position determined by at least one terminal device that performs repetition transmission with the network device. Details are not described in this embodiment of this application.

Optionally, if there is a conventional terminal device that does not support repetition transmission in a full-duplex slot in the plurality of terminal devices, the network device may schedule, to the conventional terminal device, a time-frequency resource that cannot be used together with a full-duplex slot for repetition transmission in this embodiment of this application, to reduce scheduling complexity of the network device. This is not specifically limited in this embodiment of this application.

It may be understood that in the foregoing embodiments, the methods and/or the steps implemented by the network device may alternatively be implemented by a component (for example, a processor, a chip, a chip system, a circuit, a logical module, or software like a chip or a circuit) that can be used in the network device; and the methods and/or the steps implemented by the terminal device may alternatively be implemented by a component (for example, a processor, a chip, a chip system, a circuit, a logical module, or software like a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the terminal device in the foregoing method embodiments, an apparatus including the foregoing terminal device, or a component that can be used in the terminal device, for example, a chip or a chip system. Alternatively, the communication apparatus may be the network device in the foregoing method embodiments, or an apparatus including the foregoing network device, or a component that can be used in a network device, for example, a chip or a chip system.

It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

FIG. 14 is a diagram of a structure of a communication apparatus 140. The communication apparatus 140 includes a processing module 1401 and a transceiver module 1402. The communication apparatus 140 may be configured to implement a function of the network device or the terminal device.

In some embodiments, the communication apparatus 140 may further include a storage module (which is not shown in FIG. 14), configured to store program instructions and data.

In some embodiments, the transceiver module 1402 may also be referred to as a transceiver unit, configured to implement a sending function and/or a receiving function. The transceiver module 1402 may include a transceiver circuit, a transceiver, a transceiver machine, or a communication interface.

In some embodiments, the transceiver module 1402 may include a receiving module and a sending module, respectively configured to perform receiving and sending steps performed by the network device or the terminal device in the foregoing method embodiments, and/or configured to support another process of the technology described in this specification. The processing module 1401 may be configured to perform a processing (for example, determining or generating) step performed by the network device or the terminal device in the foregoing method embodiments, and/or configured to support another process of the technology described in this specification.

When the communication apparatus 140 is configured to implement a function of the terminal device:
In some embodiments, the transceiver module 1402 is configured to receive first indication information from a network device, where the first indication information indicates whether a half-duplex slot and a full-duplex slot can be used together for repetition transmission.

The processing module 1401 is configured to determine at least one repetition transmission position of a first channel. The transceiver module 1402 is further configured to: send or receive the first channel at the at least one repetition transmission position.

Optionally, a time domain position at which the first channel is repeatedly transmitted for the first time is carried in DCI.

Optionally, the first indication information includes a bitmap whose size is M bits, and each of the M bits corresponds to at least one slot; and when a first bit corresponds to a half-duplex slot, a value of the first bit indicates whether at least one half-duplex slot corresponding to the first bit and a full-duplex slot can be used together for repetition transmission, where the first bit is any one of the M bits, and M is a positive integer.

Optionally, the first indication information further includes offset information and/or quantity information. The offset information indicates a 1st slot corresponding to a 1st bit in the M bits. The quantity information indicates a total quantity of slots corresponding to the M bits, or the quantity information indicates a quantity of slots corresponding to each bit.

Optionally, the first indication information further includes first offset information, first quantity information, and/or a first consecutive quantity. The first offset information indicates a 1$^{st}$ slot that can be used together with a full-duplex slot for repetition transmission. The first quantity information indicates a total quantity of slots in one period. The first consecutive quantity indicates a total quantity of slots that can be used together with a full-duplex slot for repetition transmission in the period.

Optionally, if the time domain position at which the first channel is repeatedly transmitted for the first time is in a first half-duplex slot, an indication of the first indication information does not need to be considered, and the repetition transmission position of the first channel includes a position in the half-duplex slot and/or a position in the full-duplex slot.

Optionally, the transceiver module 1402 is further configured to receive second indication information from the network device, where the second indication information indicates whether a first half-duplex slot and a second half-duplex slot can be used together for repetition transmission.

Optionally, in the processing module 1401, the at least one repetition transmission position includes a position in the first half-duplex slot when the time domain position at which the first channel is repeatedly transmitted for the first time is in a first full-duplex slot, the first indication information indicates that the first half-duplex slot cannot be used together with a full-duplex slot for repetition transmission and indicates that the second half-duplex slot can be used together with a full-duplex slot for repetition transmission, and the second indication information indicates that the first half-duplex slot can be used together with the second half-duplex slot for repetition transmission.

Optionally, the transceiver module 1402 is further configured to receive third indication information from the network device, where the third indication information indicates whether a third half-duplex slot and a full-duplex slot can be used together for repetition transmission.

Optionally, in the processing module 1401, the at least one repetition transmission position includes a position in the third half-duplex slot and/or a position in the full-duplex slot when the time domain position at which the first channel is repeatedly transmitted for the first time is in a first full-duplex slot, the first indication information indicates that the third half-duplex slot cannot be used together with a full-duplex slot for repetition transmission, and the third indication information indicates that the third half-duplex slot can be used together with a full-duplex slot for repetition transmission.

Optionally, the at least one repetition transmission position includes a position in a fourth half-duplex slot when the time domain position at which the first channel is repeatedly transmitted for the first time is in the first full-duplex slot, and the first indication information indicates that the fourth half-duplex slot can be used together with a full-duplex slot for repetition transmission.

Optionally, the at least one repetition transmission position includes a position in a fourth half-duplex slot when the time domain position at which the first channel is repeatedly transmitted for the first time is in the first full-duplex slot, the first indication information indicates that the fourth half-duplex slot cannot be used together with a full-duplex slot for repetition transmission, and a priority of the first channel is a preset priority.

Optionally, the transceiver module 1402 is further configured to receive fourth indication information from the network device, where the fourth indication information indicates whether the fourth half-duplex slot and a full-duplex slot can be used together for repetition transmission.

Optionally, in the processing module 1401, the at least one repetition transmission position includes a position in the fourth half-duplex slot and/or a position in the full-duplex slot when the time domain position at which the first channel is repeatedly transmitted for the first time is in the fourth half-duplex slot, and the fourth indication information indicates that the fourth half-duplex slot and a full-duplex slot can be used together for repetition transmission.

Optionally, the first indication information, the second indication information, the third indication information, and/or the fourth indication information are/is carried in DCI, RRC, and/or a system message.

When the communication apparatus 140 is configured to implement a function of the network device:
In some embodiments, the transceiver module 1402 is configured to send first indication information to a terminal device, where the first indication information indicates whether a half-duplex slot and a full-duplex slot can be used together for repetition transmission.

The processing module 1401 is configured to determine at least one repetition transmission position of a first channel. The transceiver module 1402 is further configured to: receive or send the first channel at the at least one repetition transmission position.

Optionally, a time domain position at which the first channel is repeatedly transmitted for the first time is carried in DCI.

Optionally, the first indication information includes a bitmap whose size is M bits, and each of the M bits corresponds to at least one slot; and when a first bit corresponds to a half-duplex slot, a value of the first bit indicates whether at least one half-duplex slot corresponding to the first bit and a full-duplex slot can be used together for repetition transmission, where the first bit is any one of the M bits, and M is a positive integer.

Optionally, the first indication information further includes offset information and/or quantity information. The offset information indicates a 1$^{st}$ slot corresponding to a 1$^{st}$ bit in the M bits. The quantity information indicates a total quantity of slots corresponding to the M bits, or the quantity information indicates a quantity of slots corresponding to each bit.

Optionally, the first indication information further includes first offset information, first quantity information, and/or a first consecutive quantity. The first offset information indicates a 1st slot that can be used together with a full-duplex slot for repetition transmission. The first quantity information indicates a total quantity of slots in one period. The first consecutive quantity indicates a total quantity of slots that can be used together with a full-duplex slot for repetition transmission in the period.

Optionally, if the time domain position at which the first channel is repeatedly transmitted for the first time is in a first half-duplex slot, an indication of the first indication information does not need to be considered, and the repetition transmission position of the first channel includes a position in the half-duplex slot and/or a position in the full-duplex slot.

Optionally, the transceiver module 1402 is further configured to send second indication information to the terminal device, where the second indication information indicates whether a first half-duplex slot and a second half-duplex slot can be used together for repetition transmission.

Optionally, in the processing module 1401, the at least one repetition transmission position includes a position in the first half-duplex slot when the time domain position at which the first channel is repeatedly transmitted for the first time is in a first full-duplex slot, the first indication information indicates that the first half-duplex slot cannot be used together with a full-duplex slot for repetition transmission and indicates that the second half-duplex slot can be used together with a full-duplex slot for repetition transmission, and the second indication information indicates that the first half-duplex slot can be used together with the second half-duplex slot for repetition transmission.

Optionally, the transceiver module 1402 is further configured to send third indication information to the terminal device, where the third indication information indicates whether a third half-duplex slot and a full-duplex slot can be used together for repetition transmission.

Optionally, in the processing module 1401, the at least one repetition transmission position includes a position in the third half-duplex slot and/or a position in the full-duplex slot when the time domain position at which the first channel is repeatedly transmitted for the first time is in a first full-duplex slot, the first indication information indicates that the third half-duplex slot cannot be used together with a full-duplex slot for repetition transmission, and the third indication information indicates that the third half-duplex slot can be used together with a full-duplex slot for repetition transmission.

Optionally, the at least one repetition transmission position includes a position in a fourth half-duplex slot when the time domain position at which the first channel is repeatedly transmitted for the first time is in the first full-duplex slot, and the first indication information indicates that the fourth half-duplex slot can be used together with a full-duplex slot for repetition transmission.

Optionally, the at least one repetition transmission position includes a position in a fourth half-duplex slot when the time domain position at which the first channel is repeatedly transmitted for the first time is in the first full-duplex slot, the first indication information indicates that the fourth half-duplex slot cannot be used together with a full-duplex slot for repetition transmission, and a priority of the first channel is a preset priority.

Optionally, the transceiver module 1402 is further configured to send fourth indication information to the terminal device, where the fourth indication information indicates whether a fourth half-duplex slot and a full-duplex slot can be used together for repetition transmission.

Optionally, in the processing module 1401, the at least one repetition transmission position includes a position in the fourth half-duplex slot and/or a position in the full-duplex slot when the time domain position at which the first channel is repeatedly transmitted for the first time is in the fourth half-duplex slot, and the fourth indication information indicates that the fourth half-duplex slot and a full-duplex slot can be used together for repetition transmission.

Optionally, the first indication information, the second indication information, the third indication information, and/or the fourth indication information are/is carried in DCI, RRC, and/or a system message.

All related content of the steps in the foregoing method embodiments may be cited in function descriptions of corresponding functional modules. Details are not described herein again.

In this application, the communication apparatus 140 may be presented in a form of function modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 140 in FIG. 14 is a chip or a chip system, a function/implementation process of the transceiver module 1402 may be implemented through an input/output interface (or a communication interface) of the chip or the chip system, and a function/implementation process of the processing module 1401 may be implemented through a processor (or a processing circuit) of the chip or the chip system.

Because the communication apparatus 140 provided in this embodiment may perform the foregoing methods, for technical effects that can be achieved by the communication apparatus 140, refer to the foregoing method embodiments. Details are not described herein again.

In a possible product form, the network device or the terminal device in this embodiment of this application may be further implemented by using one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In another possible product form, the network device or the terminal device in this embodiment of this application may be implemented by using a general bus architecture. For ease of description, FIG. 15 is a diagram of a structure of a communication apparatus 1500 according to an embodiment of this application. The communication apparatus 1500 includes a processor 1501 and a transceiver 1502. The communication apparatus 1500 may be a terminal device, or a chip or a chip system in the terminal device; or the communication apparatus 1500 may be a network device, or a chip or a module in the network device. FIG. 15 shows only main components of the communication apparatus 1500. In addition to the processor 1501 and the transceiver 1502, the communication apparatus may further include a memory 1503 and an input/output apparatus (not shown in the figure).

Optionally, the processor 1501 is mainly configured to: process a communication protocol and communication data, control the entire communication apparatus, execute a software program, and process data of the software program. The memory 1503 is mainly configured to store the software program and data. The transceiver 1502 may include a radio frequency circuit and an antenna. The radio frequency circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, for example, a touchscreen, a display, or a keyboard, is mainly configured to: receive data input by a user, and output data to the user.

Optionally, the processor 1501, the transceiver 1502, and the memory 1503 may be connected through a communication bus.

After the communication apparatus is powered on, the processor 1501 may read the software program in the memory 1503, interpret and execute instructions of the software program, and process data of the software program. When data needs to be sent in a wireless manner, the processor 1501 performs baseband processing on the to-be-sent data, and then outputs a baseband signal to a radio frequency circuit, and the radio frequency circuit performs radio frequency processing on the baseband signal, and then sends a radio frequency signal to the outside in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1501. The processor 1501 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in hardware implementation, a person skilled in the art may figure out that the communication apparatus 140 may be in a form of the communication apparatus 1500 shown in FIG. 15.

In an example, a function/implementation process of the processing module 1401 in FIG. 14 may be implemented by the processor 1501 in the communication apparatus 1500 shown in FIG. 15 by invoking computer-executable instructions stored in the memory 1503. A function/implementation process of the transceiver module 1402 in FIG. 14 may be implemented by the transceiver 1502 in the communication apparatus 1500 shown in FIG. 15.

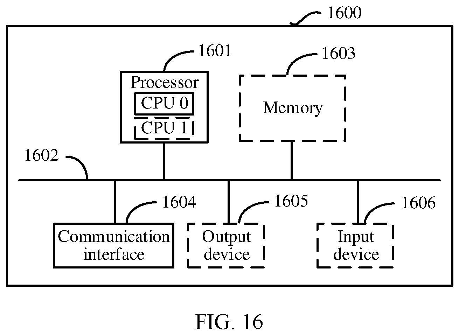

In still another possible product form, the network device or the terminal device in this application may use a composition structure shown in FIG. 16, or include components shown in FIG. 16. FIG. 16 is a composition diagram of a communication apparatus 1600 according to this application. The communication apparatus 1600 may be a terminal device, a chip in the terminal device, or a system on chip; or may be a network device, a module or a chip in the network device, or a system on chip.

As shown in FIG. 16, the communication apparatus 1600 includes at least one processor 1601 and at least one communication interface (in FIG. 16, only an example in which one communication interface 1604 and one processor 1601 are included is used for description). Optionally, the communication apparatus 1600 may further include a communication bus 1602 and a memory 1603.

The processor 1601 may be a general-purpose central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor 1601 may alternatively be another apparatus having a processing function, for example, a circuit, a component, or a software module. This is not limited.

The communication bus 1602 is configured to connect different components in the communication apparatus 1600, so that the different components can communicate with each other. The communication bus 1602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line represents the bus in FIG. 16, but this does not mean that there is only one bus or only one type of bus.

The communication interface 1604 is configured to communicate with another device or a communication network. For example, the communication interface 1604 may be a module, a circuit, a transceiver, or any apparatus that can implement communication. Optionally, the communication interface 1604 may alternatively be an input/output interface located in the processor 1601, and is configured to implement signal input and signal output of the processor.

The memory 1603 may be an apparatus having a storage function, and is configured to store instructions and/or data. The instructions may be a computer program.

For example, the memory 1603 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a disk storage medium, or another magnetic storage device. This is not limited.

It should be noted that the memory 1603 may exist independently of the processor 1601, or may be integrated with the processor 1601. The memory 1603 may be located inside the communication apparatus 1600, or may be located outside the communication apparatus 1600. This is not limited. The processor 1601 may be configured to execute the instructions stored in the memory 1603, to implement the method provided in the embodiments of this application.

In an optional implementation, the communication apparatus 1600 may further include an output device 1605 and an input device 1606. The output device 1605 communicates with the processor 1601, and may display information in a plurality of manners. For example, the output device 1605 may be a liquid crystal display (liquid crystal display, LCD), a light emitting diode (light emitting diode, LED) display device, a cathode ray tube (cathode ray tube, CRT) display device, or a projector (projector). The input device 1606 communicates with the processor 1601, and can receive an input from a user in a plurality of manners. For example, the input device 1606 may be a mouse, a keyboard, a touchscreen device, or a sensor device.

In some embodiments, in hardware implementation, a person skilled in the art may figure out that the communication apparatus 140 may be in a form of the communication apparatus 1600 shown in FIG. 16.

In an example, a function/implementation process of the processing module 1401 in FIG. 14 may be implemented by the processor 1601 in the communication apparatus 1600 shown in FIG. 16 by invoking computer-executable instructions stored in the memory 1603. A function/implementation process of the transceiver module 1402 in FIG. 14 may be implemented by the communication interface 1604 in the communication apparatus 1600 shown in FIG. 16.

It should be noted that the structure shown in FIG. 16 does not constitute a specific limitation on the network device or the terminal device. For example, in some other embodiments of this application, the network device or the terminal device may include more or fewer components than those shown in the figure, or may combine some components, or may split some components, or may have different component arrangements. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to a processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the foregoing apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and may be located in one position, or may be distributed on a plurality of network units. A component displayed as a unit may or may not be a physical unit. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a great effect.

Although this application is described with reference to specific features and embodiments thereof, it is clear that various modifications and combinations may be made to them without departing from the protection scope of this application. Correspondingly, this specification and the accompanying drawings are merely example description of this application defined by the appended claims, and are considered as any or all of modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A repetition transmission method, wherein the method comprises:

   receiving first indication information from a network device, wherein the first indication information indicates whether a half-duplex slot and a full-duplex slot can be used together for repetition transmission;
   determining at least one repetition transmission position of a first channel based on the first indication information and a time domain position at which the first channel is repeatedly transmitted for the first time; and
   sending or receiving the first channel at the at least one repetition transmission position.

2. The method according to claim 1, wherein the first indication information comprises a bitmap whose size is M bits, and each of the M bits corresponds to at least one slot; and when a first bit corresponds to a half-duplex slot, a value of the first bit indicates whether at least one half-duplex slot corresponding to the first bit and a full-duplex slot can be used together for repetition transmission, wherein the first bit is any one of the M bits, and M is a positive integer.

3. The method according to claim 2, wherein the first indication information further comprises offset information and/or quantity information;

   the offset information indicates a $1^{st}$ slot corresponding to a $1^{st}$ bit in the M bits; and
   the quantity information indicates a total quantity of slots corresponding to the M bits, or the quantity information indicates a quantity of slots corresponding to each bit.

4. The method according to claim 2 or 3, wherein the method further comprises:
   receiving second indication information from the network device, wherein the second indication information indicates whether a first half-duplex slot and a second half-duplex slot can be used together for repetition transmission.

5. The method according to claim 4, wherein the at least one repetition transmission position comprises a position in the first half-duplex slot when the time domain position at which the first channel is repeatedly transmitted for the first time is in a first full-duplex slot, the first indication information indicates that the first half-duplex slot cannot be used together with a full-duplex slot for repetition transmission and indicates that the second half-duplex slot can be used together with a full-duplex slot for repetition transmission, and the second indication information indicates that the first half-duplex slot can be used together with the second half-duplex slot for repetition transmission.

6. The method according to claim 1, wherein the first indication information comprises a first bit value, and the first bit value indicates whether a half-duplex slot and a full-duplex slot can be used together for repetition transmission.

7. The method according to claim 6, wherein the method further comprises:
   receiving third indication information from the network device, wherein the third indication information indicates whether a third half-duplex slot and a full-duplex slot can be used together for repetition transmission.

8. The method according to claim 7, wherein the at least one repetition transmission position comprises a position in the third half-duplex slot and/or a position in the full-duplex slot when the time domain position at which the first channel is repeatedly transmitted for the first time is in a first full-duplex slot, the first indication information indicates that the third half-duplex slot cannot be used together with a full-duplex slot for repetition transmission, and the third indication information indicates that the third half-duplex slot can be used together with a full-duplex slot for repetition transmission.

9. The method according to any one of claims 1 to 8, wherein the at least one repetition transmission position comprises a position in a fourth half-duplex slot when the time domain position at which the first channel is repeatedly transmitted for the first time is in the first full-duplex slot, and the first indication information indicates that the fourth half-duplex slot can be used together with a full-duplex slot for repetition transmission.

10. The method according to any one of claims 1 to 8, wherein the at least one repetition transmission position comprises a position in a fourth half-duplex slot when the time domain position at which the first channel is repeatedly transmitted for the first time is in the first full-duplex slot, the first indication information indicates that the fourth half-duplex slot cannot be used together with a full-duplex slot for repetition transmission, and a priority of the first channel is a preset priority.

11. A communication method, wherein the method comprises:

    sending first indication information to a terminal device, wherein the first indication information indicates whether a half-duplex slot and a full-duplex slot can be used together for repetition transmission;
    determining at least one repetition transmission position of a first channel based on the first indication information and a time domain position at which the first channel is repeatedly transmitted for the first time; and
    receiving or sending the first channel at the at least one repetition transmission position.

12. The method according to claim 11, wherein the first indication information comprises a bitmap whose size is M bits, and each of the M bits corresponds to at least one slot; and when a first bit corresponds to a half-duplex slot, a value of the first bit indicates whether at least one half-duplex slot corresponding to the first bit and a full-duplex slot can be used together for repetition transmission, wherein the first bit is any one of the M bits, and M is a positive integer.

13. The method according to claim 12, wherein the first indication information further comprises offset information and/or quantity information;

   the offset information indicates a $1^{st}$ slot corresponding to a $1^{st}$ bit in the M bits; and
   the quantity information indicates a total quantity of slots corresponding to the M bits, or the quantity information indicates a quantity of slots corresponding to each bit.

14. The method according to claim 12 or 13, wherein the method further comprises:
   sending second indication information to the terminal device, wherein the second indication information indicates whether a first half-duplex slot and a second half-duplex slot can be used together for repetition transmission.

15. The method according to claim 14, wherein the at least one repetition transmission position comprises a position in the first half-duplex slot when the time domain position at which the first channel is repeatedly transmitted for the first time is in a first full-duplex slot, the first indication information indicates that the first half-duplex slot cannot be used together with a full-duplex slot for repetition transmission and indicates that the second half-duplex slot can be used together with a full-duplex slot for repetition transmission, and the second indication information indicates that the first half-duplex slot can be used together with the second half-duplex slot for repetition transmission.

16. The method according to claim 11, wherein the first indication information comprises a first bit value, and the first bit value indicates whether a half-duplex slot and a full-duplex slot can be used together for repetition transmission.

17. The method according to claim 16, wherein the method further comprises:
   sending third indication information to the terminal device, wherein the third indication information indicates whether a third half-duplex slot and a full-duplex slot can be used together for repetition transmission.

18. The method according to claim 17, wherein the at least one repetition transmission position comprises a position in the third half-duplex slot and/or a position in the full-duplex slot when the time domain position at which the first channel is repeatedly transmitted for the first time is in a first full-duplex slot, the first indication information indicates that the third half-duplex slot cannot be used together with a full-duplex slot for repetition transmission, and the third indication information indicates that the third half-duplex slot can be used together with a full-duplex slot for repetition transmission.

19. The method according to any one of claims 11 to 18, wherein the at least one repetition transmission position comprises a position in a fourth half-duplex slot when the time domain position at which the first channel is repeatedly transmitted for the first time is in the first full-duplex slot, and the first indication information indicates that the fourth half-duplex slot can be used together with a full-duplex slot for repetition transmission.

20. The method according to any one of claims 11 to 18, wherein the at least one repetition transmission position comprises a position in a fourth half-duplex slot when the time domain position at which the first channel is repeatedly transmitted for the first time is in the first full-duplex slot, the first indication information indicates that the fourth half-duplex slot cannot be used together with a full-duplex slot for repetition transmission, and a priority of the first channel is a preset priority.

21. A communication apparatus, wherein the communication apparatus comprises a processor, and the processor is configured to run a computer program or instructions, to enable the communication apparatus to perform the method according to any one of claims 1 to 10, or enable the communication apparatus to perform the method according to any one of claims 11 to 20.

22. A computer-readable storage medium, wherein the computer-readable storage medium stores computer instructions or a program, and when the computer instructions or the program is run on a computer, the method according to any one of claims 1 to 10 is performed, or the method according to any one of claims 11 to 20 is performed.

FIG. 1

EP 4 572 479 A1

FIG. 2a

FIG. 2b

FIG. 2c

FIG. 3

FIG. 4

Repeated transmission
position of a first channel

Time

Full-
duplex
slot

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |

◄——— DL ———►◄——— UL ———►◄——— DL ———►

First
half-
duplex
slot

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |

◄——————————————— UL ———————————————►

Repeated transmission
position of the first channel

Frequency

FIG. 5

| Terminal device | | Network device |

S601: First indication information, indicating whether a half-duplex slot can be used together with a full-duplex slot for repeated transmission

S601a: DCI or RRC, where the DCI indicates a time domain position at which a first channel is repeatedly transmitted for the first time, and the RRC indicates the time domain position at which the first channel is repeatedly transmitted for the first time

S601b: CG resource, where the CG resource triggers a predefined transmission occasion of the first channel

S602: Determine a repeated transmission position of the first channel

S603: Determine the repeated transmission position of the first channel

S604: First channel

FIG. 6

FIG. 7

EP 4 572 479 A1

Frequency

| Duplex type | Full-duplex | Full-duplex | Full-duplex | Half-duplex | Half-duplex | Full-duplex | Half-duplex | Half-duplex |
|---|---|---|---|---|---|---|---|---|
| First indication information | 0 | 1 | 1 | 0 | 1 | 1 | 0 | 1 |
| | DL | DL | DL | | | DL | | |
| | UL | UL | UL | UL | UL | UL | DL | DL |
| | DL | DL | DL | | | DL | | |
| | Slot 0 | Slot 1 | Slot 2 | Slot 3 | Slot 4 | Slot 5 | Slot 6 | Slot 7 |

Time

FIG. 8a

Frequency

| Duplex type | Full-duplex | Full-duplex | Full-duplex | Half-duplex | Half-duplex | Full-duplex | Half-duplex | Half-duplex |
|---|---|---|---|---|---|---|---|---|
| First indication information | 1 | | 0 | | 1 | | 0 | |
| | DL | DL | DL | | | DL | | |
| | UL | UL | UL | UL | UL | UL | DL | DL |
| | DL | DL | DL | | | DL | | |
| | Slot 0 | Slot 1 | Slot 2 | Slot 3 | Slot 4 | Slot 5 | Slot 6 | Slot 7 |

Time

FIG. 8b

Frequency

| Duplex type | Full-duplex | Full-duplex | Full-duplex | Half-duplex | Half-duplex | Full-duplex | Half-duplex | Half-duplex |
|---|---|---|---|---|---|---|---|---|
| First indication information | | 1 | 1 | 0 | 1 | 1 | 0 | |
| | DL | DL | DL | | | DL | | |
| | UL | UL | UL | UL | UL | UL | DL | DL |
| | DL | DL | DL | | | DL | | |
| | Slot 0 | Slot 1 | Slot 2 | Slot 3 | Slot 4 | Slot 5 | Slot 6 | Slot 7 |

Time

FIG. 9a

FIG. 9b

FIG. 10a

FIG. 10b

FIG. 11a

FIG. 11b

| | | | | | | | | | |
|---|---|---|---|---|---|---|---|---|---|
| Frequency | | | | | | | | | |
| Duplex type | Full-duplex | Full-duplex | Full-duplex | Half-duplex | Half-duplex | Full-duplex | Half-duplex | Half-duplex | Full-duplex | Half-duplex |
| First indication information | | | 1 | 1 | | | | 1 | 1 | |
| | DL | DL | DL | | | DL | | | DL | |
| | UL | UL | UL | UL | UL | UL | DL | UL | UL | DL |
| | DL | DL | DL | | | DL | | | DL | |
| | ←——————— Period ———————→ | | | | | ←——————— Period ———————→ | | | | |
| | Slot 0 | Slot 1 | Slot 2 | Slot 3 | Slot 4 | Slot 5 | Slot 6 | Slot 7 | Slot 8 | Slot 9 |

Time

FIG. 12

| Duplex type | Full-duplex | Full-duplex | Full-duplex | Half-duplex | Half-duplex | Full-duplex | Half-duplex | Half-duplex |
|---|---|---|---|---|---|---|---|---|
| | DL | DL | DL | | | DL | | |
| | UL | UL | UL | UL | UL | UL | DL | DL |
| | DL | DL | DL | | | DL | | |
| | Slot 0 | Slot 1 | Slot 2 | Slot 3 | Slot 4 | Slot 5 | Slot 6 | Slot 7 |

Frequency / Time

FIG. 13

Communication apparatus 140

Processing module 1401

Transceiver module 1402

FIG. 14

Communication apparatus 1500

Processor 1501 — Instructions

Memory 1503 — Instructions

Transceiver 1502 — Radio frequency circuit — Antenna

FIG. 15

1600

1601

Processor

CPU 0

CPU 1

1603

Memory

1602

1604

Communication interface

1605

Output device

1606

Input device

FIG. 16

**INTERNATIONAL SEARCH REPORT**

| International application No. |
| --- |
| **PCT/CN2023/120178** |

**A.    CLASSIFICATION OF SUBJECT MATTER**

H04W 72/0446(2023.01)i

According to International Patent Classification (IPC) or to both national classification and IPC

**B.    FIELDS SEARCHED**

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

CNTXT, ENTXTC, WPABSC, 3GPP, CNKI: 半双工, 全双工, 时隙, 时域, 位置, 重传, 重发, 重复, 重新, 第一次, 首次, HD, FD, full w duplex, half w duplex, slot, time, position, location, re w transmit+, first

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2021097687 A1 (GUANGDONG OPPO MOBILE TELECOMMUNICATIONS CORP., LTD.) 27 May 2021 (2021-05-27)<br>description, page 4, paragraph 3-page 12, paragraph 10 | 1-22 |
| Y | CN 114830571 A (QUALCOMM INC.) 29 July 2022 (2022-07-29)<br>description, paragraphs [0013]-[0020], [0045]-[0048], and [0087]-[0113] | 1-22 |
| A | US 2021320780 A1 (QUALCOMM INC.) 14 October 2021 (2021-10-14)<br>entire document | 1-22 |
| A | CN 107925524 A (TELEFONAKTIEBOLAGET LM ERICSSON (PUBL)) 17 April 2018 (2018-04-17)<br>entire document | 1-22 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 November 2023** | **14 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120178**

| Patent document cited in search report | | | Publication date (day/month/year) | Patent family member(s) | | | Publication date (day/month/year) |
|---|---|---|---|---|---|---|---|
| WO | 2021097687 | A1 | 27 May 2021 | CN | 114342509 | A | 12 April 2022 |
| CN | 114830571 | A | 29 July 2022 | WO | 2021133974 | A1 | 01 July 2021 |
| | | | | EP | 4082139 | A1 | 02 November 2022 |
| US | 2021320780 | A1 | 14 October 2021 | None | | | |
| CN | 107925524 | A | 17 April 2018 | WO | 2017025141 | A1 | 16 February 2017 |
| | | | | US | 2018212746 | A1 | 26 July 2018 |
| | | | | EP | 3335346 | A1 | 20 June 2018 |
| | | | | IN | 201817001463 | A | 06 April 2018 |

Form PCT/ISA/210 (patent family annex) (July 2022)

**EP 4 572 479 A1**

**Patent documents cited in the description**

- CN 202211214676